# EUROPEAN PATENT APPLICATION

(11) **EP 4 815 615 A1**
(43) Date of publication of application: **30.09.2026**
(21) Application number: 24910286.4
(22) Date of filing: 31.10.2024
(51) Int. Cl.: H04W 76/12

(54) **DATA TRANSMISSION METHOD, APPARATUS AND SYSTEM**

(30) Priority: 26.12.2023 CN 202311819277
(71) Applicant: Huawei Technologies Co., Ltd., Shenzhen, Guangdong 518129 (CN)
(72) Inventor: GE, Cuili, Shenzhen, Guangdong 518129 (CN); LI, Yan, Shenzhen, Guangdong 518129 (CN)
(74) Representative: Thun, Clemens
(86) International application number: PCT/CN2024/128899
(87) International publication number: WO 2025/139348

(57) **Abstract**

A data transmission method, an apparatus, and a system are provided. In the method, a first access network device sends first information, where the first information indicates a first address of a first tunnel, the first tunnel is used to transmit data between a terminal device and the first access network device by using a first transport layer network protocol, and the first address is associated with the first access network device; and establishes the first tunnel with the terminal device based on the first address. The method is used to design a QUIC protocol applicable to UE and an access network device.

## Description

### CROSS-REFERENCE TO RELATED APPLICATIONS

This application claims priority to Chinese Patent Application No. 202311819277.2, filed with the China National Intellectual Property Administration on December 26, 2023 and entitled "DATA TRANSMISSION METHOD, APPARATUS, AND SYSTEM", which is incorporated herein by reference in its entirety.

### TECHNICAL FIELD

This application relates to the field of communication technologies, and in particular, to a data transmission method, an apparatus, and a system.

### BACKGROUND

In a wireless communication system, for example, in a new radio (new radio, NR) system, user equipment (user equipment, UE) may establish a protocol data unit (protocol data unit, PDU) session (session) with a data network (data network, DN) network element through a user plane function (user plane function, UPF) network element, and the PDU session provides a data transmission service between the UE and the DN network element. To support simultaneous data transmission of UE between 3GPP access and non-3GPP access technologies, a quick UDP internet connections (quick UDP internet connections, QUIC) protocol equivalent to the TCP is used to establish a QUIC connection between the UE and the UPF network element. Each connection may include different paths (paths) that are separately carried on a 3GPP access path and a non-3GPP access path. The QUIC protocol further has a multi-stream multiplexing feature, and can allow simultaneous transmission of data of a plurality of streams.

In some current designs, to fully leverage multi-stream multiplexing and multipath features of the QUIC, it is considered to introduce the QUIC protocol between UE and an access network device (for example, a RAN). However, due to mobility of the UE, a RAN accessed by the UE frequently changes. In addition, a protocol stack between the UE and the RAN is complex, and a QUIC protocol applicable to the UE and a UPF network element is not applicable to the UE and the RAN. Therefore, how to design a QUIC protocol applicable to the UE and the RAN is still an important problem to be urgently resolved.

### SUMMARY

This application provides a data transmission method, an apparatus, and a system, to design a QUIC protocol applicable to UE and an access network device.

According to a first aspect, this application provides a data transmission method. The method may be applied to a first access network device, and the method may include: sending first information, where the first information indicates a first address of a first tunnel, the first tunnel is used to transmit data between a terminal device and the first access network device by using a first transport layer network protocol, and the first address is associated with the first access network device; and establishing the first tunnel with the terminal device based on the first address.

According to the foregoing solution, the first tunnel using the first transport layer network protocol may be established between the terminal device and the first access network device, so that air interface transmission quality can be improved based on the first tunnel.

In a possible implementation, the method may further include: receiving first indication information, where the first indication information indicates that the terminal device supports the first transport layer network protocol, or the first indication information indicates that the terminal device supports multipath communication performed based on the first transport layer network protocol; and configuring the first address of the first tunnel for the terminal device based on the first indication information.

In a possible implementation, receiving the first indication information includes: receiving a first access stratum message from the terminal device, where the first access stratum message includes the first indication information; or receiving the first indication information from a core network element.

In a possible implementation, the method may further include: receiving second indication information, where the second indication information indicates to establish the first tunnel between the terminal device and the first access network device; and configuring the first address of the first tunnel for the terminal device based on the second indication information.

In a possible implementation, receiving the second indication information includes: receiving a second access stratum message from the terminal device, where the second access stratum message includes the second indication information; or receiving the second indication information from a core network.

In a possible implementation, the first information further includes attribute information of the first tunnel; and establishing the first tunnel with the terminal device based on the first address includes: establishing the first tunnel with the terminal device based on the first address and the attribute information of the first tunnel.

In a possible implementation, sending the first information includes: sending the first information to the terminal device; or sending the first information to a core network.

In a possible implementation, the method further includes: determining the attribute information of the first tunnel based on fourth indication information from a core network element, where the fourth indication information indicates to configure the first address of the first tunnel; or receiving the attribute information of the first tunnel from the core network.

In a possible implementation, the first tunnel includes at least one communication path, a first communication path in the at least one communication path is used to transmit data between the terminal device and the first access network device, a first identifier of the first tunnel and the first address are associated with the first communication path, a second communication path in the at least one communication path is used to transmit data between the terminal device and a second access network device, and the method further includes: receiving second information from the second access network device, where the second information includes a second identifier of the first tunnel, or the second information includes a second identifier of the first tunnel and a second address of the first tunnel, and the second identifier and the second address are associated with the second communication path; and sending the second identifier to the terminal device, or sending the second identifier and the second address to the terminal device.

In a possible implementation, sending the second identifier to the terminal device, or sending the second identifier and the second address to the terminal device includes: sending a third access stratum message to the terminal device, where the third access stratum message includes the second identifier, or the third access stratum message includes the second identifier and the second address; or sending first control information to the terminal device through the first tunnel, where the first control message includes the second identifier, or the first control information includes the second identifier and the second address.

In a possible implementation, the method further includes: sending a downlink data packet, where the downlink data packet includes the second identifier and the second address of the first tunnel.

In a possible implementation, the method further includes: sending sixth indication information to the second access network device, where the sixth indication information indicates a fourth identifier of the first tunnel, or the sixth indication information indicates a fourth identifier and a fourth address of the first tunnel, and the fourth identifier and the fourth address are associated with the terminal device.

In a possible implementation, the method further includes: sending path information of the second communication path to the second access network device; or receiving path information of the second communication path from the second access network device.

In a possible implementation, the method further includes: receiving third information of the first tunnel from a third access network device, where the third information includes a third identifier of the first tunnel, or the third information includes a third identifier of the first tunnel and a third address of the first tunnel, the third identifier and the third address are associated with the third access network device, and the third access network device is a target access network device of the terminal device; and sending the third identifier to the terminal device, or sending the third identifier and the third address to the terminal device.

In a possible implementation, the method further includes: sending a downlink data packet to the terminal device, where the downlink data packet includes the third identifier and the third address.

In a possible implementation, sending the third identifier to the terminal device, or sending the third identifier and the third address to the terminal device includes: sending a fourth access stratum message to the terminal device, where the fourth access stratum message includes the third identifier, or the fourth access stratum message includes the third identifier and the third address; or sending second control information to the terminal device through the first tunnel, where the second control information includes the third identifier, or the second control information includes the third identifier and the third address.

In a possible implementation, if the terminal device, the first access network device, and the third access network device all support a DAPS function, the method further includes: adding a third communication path to the first tunnel, where the third communication path is associated with the third access network device; or migrating the first tunnel from the first communication path to the third communication path, where the third communication path is associated with the third access network device.

In a possible implementation, the method further includes: sending fifth indication information to the third access network device, where the fifth indication information indicates the fourth identifier of the first tunnel, or the fifth indication information indicates the fourth identifier and the fourth address of the first tunnel, and the fourth identifier and the fourth address are associated with the terminal device.

In a possible implementation, the method further includes: sending a context of the first tunnel to the third access network device.

According to a second aspect, this application provides a data transmission method. The method may be applied to a terminal device. The method includes: receiving first information, where the first information indicates a first address of a first tunnel, the first tunnel is used to transmit data between the terminal device and a first access network device by using a first transport layer network protocol, and the first address is associated with the first access network device; and establishing the first tunnel with the first access network device based on the first address.

In a possible implementation, the method further includes: sending first indication information, where the first indication information indicates that the terminal device supports the first transport layer network protocol, or the first indication information indicates that the terminal device supports multipath communication performed based on the first transport layer network protocol.

In a possible implementation, sending the first indication information includes: sending a first access stratum message to the first access network device, where the first access stratum message includes the first indication information; or sending a first non-access stratum message to a core network, where the first non-access stratum message includes the first indication information.

In a possible implementation, the method further includes: sending second indication information, where the second indication information indicates to establish the first tunnel between the terminal device and the first access network device.

In a possible implementation, sending the second indication information includes: sending a second access stratum message to the first access network device, where the second access stratum message includes the second indication information; or sending a second non-access stratum message to a core network, where the second non-access stratum message includes the second indication information.

In a possible implementation, the first information further includes attribute information of the first tunnel; and establishing the first tunnel with the first access network device based on the first address includes: establishing the first tunnel with the first access network device based on the first address and the attribute information of the first tunnel.

In a possible implementation, the method further includes: determining the attribute information of the first tunnel based on the first information; receiving the attribute information of the first tunnel from the first access network device, where the attribute information of the first tunnel is carried in a downlink access stratum message; or receiving the attribute information of the first tunnel from a core network element.

In a possible implementation, receiving the first information includes: receiving the first information from the first access network device, where the first information is configured by the first access network device.

In a possible implementation, the first tunnel includes at least one communication path, a first communication path in the at least one communication path is used to transmit data between the terminal device and the first access network device, a first identifier of the first tunnel and the first address are associated with the first communication path, a second communication path in the at least one communication path is used to transmit data between the terminal device and a second access network device, and the method further includes: receiving second information of the first tunnel from the first access network device, where the second information includes a second identifier of the first tunnel, or the second information includes a second identifier of the first tunnel and a second address of the first tunnel, and the second identifier and the second address are associated with the second communication path.

In a possible implementation, receiving the second information of the first tunnel from the first access network device includes: receiving a third access stratum message from the first access network device, where the third access stratum message includes the second information; or receiving first control information from the first access network device through the first tunnel, where the first control information includes the second information.

In a possible implementation, the method further includes: receiving a downlink data packet, where the downlink data packet includes the second identifier and the second address of the first tunnel.

In a possible implementation, the method further includes: sending an uplink data packet to the second access network device, where the uplink data packet includes the second identifier and the second address of the first tunnel.

In a possible implementation, the first access network device is a source access network device of the terminal device, and the method further includes: receiving a third identifier of the first tunnel, or receiving a third identifier and a third address of the first tunnel, where the third identifier and the third address are associated with data transmitted between the terminal device and a third access network device on the first tunnel, and the third access network device is a target access network device of the terminal device.

In a possible implementation, receiving the third identifier of the first tunnel, or receiving the third identifier and the third address of the first tunnel includes: receiving a fourth access stratum message from the first access network device, where the fourth access stratum message includes the third identifier, or the fourth access stratum message includes the third identifier and the third address; or receiving second control information from the first access network device through the first tunnel, where the second control information includes the third identifier, or includes the third identifier and the third address.

In a possible implementation, the method further includes: receiving a downlink data packet from the first access network device or receiving a downlink data packet from the third access network device, where the downlink data packet includes the third identifier and the third address.

In a possible implementation, the method further includes: sending an uplink data packet to the third access network device, where the uplink data packet includes the third identifier and the third address.

According to a third aspect, this application provides a data transmission method. The method may be applied to an SMF network element, and the method includes: determining that a first tunnel needs to be established between a terminal device and a first access network device, where the first tunnel uses a first transport layer network protocol, and the first tunnel is used to transmit data between the terminal device and the first access network device; and sending fourth indication information to the first access network device, where the fourth indication information indicates to configure a first address of the first tunnel.

In a possible implementation, the method further includes: receiving first information from the first access network device, where the first information indicates the first address of the first tunnel; and sending the first information to the terminal device through the first access network device.

In a possible implementation, the method further includes: sending attribute information of the first tunnel to the first access network device; or sending attribute information of the first tunnel to the terminal device through the first access network device.

In a possible implementation, the method further includes: receiving first indication information, where the first indication information indicates that the terminal device supports the first transport layer network protocol, or the first indication information indicates that the terminal device supports multipath communication performed based on the first transport layer network protocol; and determining that the first tunnel needs to be established between the terminal device and the first access network device includes: determining, based on the first indication information, that the first tunnel needs to be established between the terminal device and the first access network device.

In a possible implementation, determining that the first tunnel needs to be established between the terminal device and the first access network device includes: determining, based on policy information from a PCF network element or subscription information from a UDM network element, that the first tunnel needs to be established between the terminal device and the first access network device.

According to a fourth aspect, this application provides a data transmission method. The method may be applied to a second access network device, and the method includes: sending a second identifier of a first tunnel, or sending a second identifier and a second address of a first tunnel, where the first tunnel is used to transmit data between a terminal device and the second access network device by using a first transport layer network protocol, the second identifier and the second address are associated with a second communication path of the first tunnel, the first tunnel includes at least one communication path, a first communication path in the at least one communication path is used to transmit data between the terminal device and a first access network device, a first identifier and a first address of the first tunnel are associated with the first communication path, and the second communication path in the at least one communication path is used to transmit data between the terminal device and the second access network device; and receiving an uplink data packet from the terminal device, where the uplink data packet includes the second identifier and the second address.

In a possible implementation, sending the second identifier of the first tunnel, or sending the second identifier and the second address of the first tunnel includes: sending second information to the first access network device; or sending the second identifier and the second address to the first access network device.

In a possible implementation, the method further includes: receiving sixth indication information from the first access network device, where the sixth indication information indicates a fourth identifier of the first tunnel, or the sixth indication information indicates a fourth identifier and a fourth address of the first tunnel, and the fourth identifier and the fourth address are associated with the terminal device; and sending a downlink data packet to the terminal device based on the fourth identifier and the fourth address, where the downlink data packet includes the second identifier and the second address.

In a possible implementation, the method further includes: receiving path information of the second communication path from the first access network device; or sending the path information of the second communication path to the first access network device.

According to a fifth aspect, this application provides a data transmission method. The method may be applied to a third access network device. The method includes: sending a third identifier of a first tunnel, or sending a third identifier and a third address of a first tunnel, where the first tunnel is used to transmit data between a terminal device and the third access network device by using a first transport layer network protocol, the third address is associated with the third access network device, and the third access network device is a target access network device of the terminal device; and receiving an uplink data packet from the terminal device, where the uplink data packet includes the third identifier and the third address.

In a possible implementation, sending the third identifier of the first tunnel, or sending the third identifier and the third address of the first tunnel includes: sending the third identifier of the first tunnel to the first access network device, or sending the third identifier and the third address of the first tunnel to the first access network device.

In a possible implementation, the method further includes: receiving fifth indication information from the first access network device, where the fifth indication information indicates a fourth identifier of the first tunnel, or the fifth indication information indicates a fourth identifier and a fourth address of the first tunnel, and the fourth identifier and the fourth address are associated with the terminal device.

In a possible implementation, the method further includes: configuring the third address for the terminal device based on indication information from the first access network device, or configuring the third identifier and the third address for the terminal device based on indication information from the first access network device.

In a possible implementation, the method further includes: sending a downlink data packet to the terminal device based on the fourth identifier and the fourth address, where the downlink data packet includes the third identifier, the third address, the fourth identifier, and the fourth address.

In a possible implementation, the method further includes: receiving a context of the first tunnel from the first access network device.

In a possible implementation, the method further includes: indicating the first access network device to delete the context of the first tunnel.

According to a sixth aspect, this application provides a communication apparatus, including at least one processor and an interface circuit. The interface circuit is configured to provide data or code instructions for the at least one processor, and the at least one processor is configured to implement the method according to any one of the first aspect and the possible designs of the first aspect, or implement the method according to any one of the second aspect and the possible designs of the second aspect, or implement the method according to any one of the third aspect and the possible designs of the third aspect, or implement the method according to any one of the fourth aspect or the possible designs of the fourth aspect, or implement the method according to any one of the fifth aspect or the possible designs of the fifth aspect by using a logic circuit or by executing the code instructions.

According to a seventh aspect, an embodiment of this application provides a communication system, including a communication apparatus configured to implement the method according to any one of the first aspect and the possible designs of the first aspect, or a communication apparatus configured to implement the method according to any one of the second aspect and the possible designs of the second aspect, or a communication apparatus configured to implement the method according to any one of the third aspect and the possible designs of the third aspect, or a communication apparatus configured to implement the method according to any one of the fourth aspect and the possible designs of the fourth aspect, or a communication apparatus configured to implement the method according to any one of the fifth aspect or the possible designs of the fifth aspect.

According to an eighth aspect, an embodiment of this application provides a computer-readable storage medium. The computer-readable storage medium stores program code, and when the program code is run on a computer, the computer is enabled to perform the method according to any one of the first aspect and the possible designs of the first aspect, or when the program code is run on a computer, the computer is enabled to perform the method according to any one of the second aspect and the possible designs of the second aspect, or when the program code is run on a computer, the computer is enabled to perform the method according to any one of the third aspect and the possible designs of the third aspect, or when the program code is run on a computer, the computer is enabled to perform the method according to any one of the fourth aspect and the possible designs of the fourth aspect, or when the program code is run on a computer, the computer is enabled to perform the method according to any one of the fifth aspect and the possible designs of the fifth aspect.

According to a ninth aspect, an embodiment of this application provides a computer program product. When the computer program product runs on a computer, the computer is enabled to perform the method according to any one of the first aspect and the possible designs of the first aspect, or perform the method according to any one of the second aspect and the possible designs of the second aspect, or perform the method according to any one of the third aspect and the possible designs of the third aspect, or perform the method according to any one of the fourth aspect and the possible designs of the fourth aspect, or perform the method according to any one of the fifth aspect or the possible designs of the fifth aspect.

Based on the implementations provided in the foregoing aspects, embodiments of this application may be further combined to provide more implementations.

### BRIEF DESCRIPTION OF DRAWINGS

FIG. 1(a) and FIG. 1(b) are diagrams of communication systems to which an embodiment of this application is applicable;
FIG. 2 is a diagram of an architecture of a protocol stack;
FIG. 3 is a diagram of an encapsulation mode of a QUIC data packet;
FIG. 4 is a diagram of a frame of a QUIC data packet;
FIG. 5A is a diagram of an address change;
FIG. 5B is a diagram of connecting a terminal to a server based on a plurality of access technologies;
FIG. 5C is a diagram of a DC scenario;
FIG. 6 is a schematic flowchart of a data transmission method according to an embodiment of this application;
FIG. 7 is a schematic flowchart of a data transmission method according to an embodiment of this application;
FIG. 8 is a diagram of a multipath feature;
FIG. 9 is a schematic flowchart of a data transmission method according to an embodiment of this application;
FIG. 10 is a schematic flowchart of a data transmission method according to an embodiment of this application;
FIG. 11 is a schematic flowchart of a data transmission method according to an embodiment of this application;
FIG. 12 is a schematic flowchart of a data transmission method according to an embodiment of this application;
FIG. 13 is a diagram of a buffer status;
FIG. 14 is a schematic flowchart of a data transmission method according to an embodiment of this application;
FIG. 15 is a diagram of a structure of a communication apparatus; and
FIG. 16 is a diagram of a structure of another communication apparatus.

### DESCRIPTION OF EMBODIMENTS

To cope with challenges for wireless broadband technologies and maintain a leading advantage of a 3rd generation partnership project (3rd generation partnership project, 3GPP) network, the 3GPP standard group has formulated a next generation mobile communication network system (Next Generation System) architecture, which is referred to as a 5G network architecture. The architecture not only supports access to a 5G core network (core network, CN) by using a radio access technology (for example, a long term evolution (long term evolution, LTE) access technology or a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

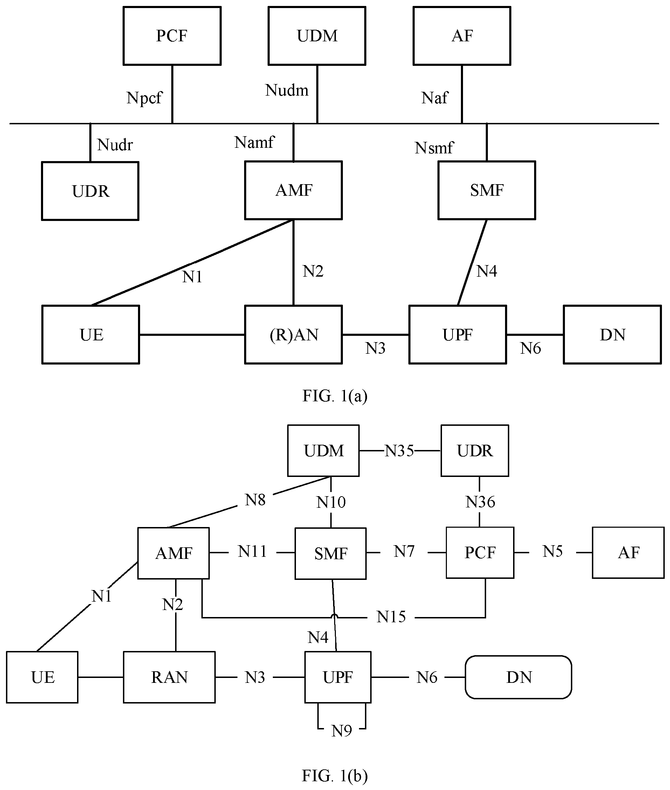

FIG. 1(a) is a diagram of a 5G network architecture based on a service-based architecture. The 5G network architecture shown in FIG. 1(a) may include an access network device and a core network device. A terminal device accesses a data network (data network, DN) through the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network expos) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart home, smart office, smart wearables, smart transportation, and smart city. The terminal device may be a mobile phone, a tablet computer, a computer having a wireless transceiver function, a wearable device, a vehicle, an urban air transportation means (like an uncrewed aerial vehicle or a helicopter), a ship, a robot, a mechanical arm, a smart home device, or the like.

The access network device may be a radio access network (radio access network, RAN) device or a wireline access network (wireline access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, or a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed-line phone network device, a switch, or a router.

The access network device and the terminal device may be at fixed locations, or may be movable. The access network device and the terminal device may be deployed on land, including an indoor or outdoor device, a handheld device, or a vehicle-mounted device; or may be deployed on a water surface; or may be deployed on a plane, a balloon, and an artificial satellite in the air. Application scenarios of the access network device and the terminal device are not limited in embodiments of this application.

The AMF network element is responsible for mobility management of the UE, including mobility status management, allocation of a temporary identity of the UE, and authentication and authorization on the UE.

The SMF network element is responsible for UPF network element selection, UPF network element reselection, IP address allocation, bearer establishment, modification, and release, and quality of service (quality of service, QoS) control.

The UPF network element supports all or some of the following functions: interconnection between a protocol data unit (protocol data unit, PDU) session and a data network; packet routing and forwarding (for example, supporting uplink classification (Uplink classifier) on traffic and then forwarding of the traffic to a data network); and data packet detection.

The UDM network element is responsible for managing subscription data, and notifying a corresponding network element when the subscription data is modified.

The UDR network element stores and retrieves subscription data, policy data, common architecture data, and the like for the UDM network element, the PCF network element, and the NEF network element to obtain related data. The UDR network element needs to provide different data access authentication mechanisms for different types of data such as subscription data and policy data, to ensure data access security. For an illegal service-based operation or data access request, the UDR network element needs to return a failure response carrying a proper cause value.

The NEF network element is configured to support exposure of capabilities and events.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element is responsible for policy control functions such as charging at a session level and a service flow level, QoS bandwidth assurance and mobility management, and terminal device policy decision. The PCF network element includes an access and mobility management policy control function (access and mobility management policy control function, AM PCF) network element and a session management policy control function (session management PCF, SM PCF) network element. The AM PCF network element is configured to make an AM policy for a terminal device, and the AM PCF network element may also be referred to as a policy control network element that provides a service for a terminal device (PCF for UE). The SM PCF network element is configured to make a session management policy (session management policy, SM policy) for a session, and the SM PCF network element may also be referred to as a policy control network element that provides a service for a session (PCF for a PDU session).

The NRF network element may be configured to provide a network element discovery function, and provide, based on a request of another network element, network element information corresponding to a network element type. The NRF further provides a network element management service, for example, network element registration, update, and deregistration, and network element status subscription and push.

The BSF network element may provide functions such as BSF service registration/deregistration/update, detection on a connection to the NRF, session binding information creation, UE information obtaining, and session binding information query for duplicate IP addresses.

The AUSF network element is responsible for performing authentication on the UE, to determine whether to allow the UE to access a network.

The DN is a network located outside an operator network. The operator network may access a plurality of DNs, and a plurality of services may be deployed on the DN, to provide services such as data and/or voice for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server to obtain an instruction of the control server, transmit collected sensor data to the control server according to the instruction, and the like. For another example, the DN is an internal office network of a company, a mobile phone or a computer of an employee of the company may be the terminal device, and the mobile phone or the computer of the employee may access information, data resources, and the like on the internal office network of the company.

In FIG. 1(a), Npcf, Nufr, Nudm, Naf, Namf, Nsmf are respectively service-based interfaces provided by the PCF, the UDR, the UDM, the AF, the AMF, and the SMF, and are configured to invoke corresponding service-based operations. N1, N2, N3, N4, and N6 are interface sequence numbers. Meanings of these interface sequence numbers are as follows:
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network device, and may be configured to transfer radio bearer control information and the like from a core network side to the access network device.
(3) N3 is an interface between the access network device and the UPF, and is mainly configured to transfer uplink and downlink user plane data between the access network device and the UPF.
(4) N4 is an interface between the SMF and the UPF, and may be configured to transfer information between a control plane and a user plane, including delivering a forwarding rule, a QoS rule, a traffic statistics rule, and the like from the control plane to the user plane, and reporting user plane information.
(5) N6 is an interface between the UPF and the DN, and is configured to transfer uplink and downlink user data flows between the UPF and the DN.

FIG. 1(b) is a diagram of a 5G network architecture based on point-to-point interfaces. For descriptions of functions of network elements in the figure, refer to descriptions of functions of corresponding network elements in FIG. 1(a). Details are not described again. A main difference between FIG. 1(b) and FIG. 1(a) lies in the following: Interfaces between control plane network elements in FIG. 1(a) are service-based interfaces, and interfaces between control plane network elements in FIG. 1(b) are point-to-point interfaces.

In the architecture shown in FIG. 1(b), names and functions of interfaces between network elements are as follows:
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a control policy at a PDU session granularity and a control policy at a service data flow granularity.
(4) N8 is an interface between the AMF network element and the UDM network element, and may be used by the AMF network element to obtain subscription data and authentication data that are related to access and mobility management from the UDM network element, and used by the AMF network element to register information related to terminal device mobility management and the like with the UDM network element.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain subscription data related to session management from the UDM network element, and used by the SMF network element to register information related to a terminal device session and the like with the UDM network element.
(7) N11 is an interface between the SMF network element and the AMF network element, and may be configured to transfer PDU session tunnel information between the access network device and the UPF, transfer a control message sent to the terminal device, transfer radio resource control information sent to the access network device, and the like.
(8) N15 is an interface between the PCF network element and the AMF network element, and may be configured to deliver a terminal device policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be implemented by a plurality of devices, or may be one function module in one device. This is not specifically limited in embodiments of this application.

The mobility management network element, the session management network element, the data management network element, and the network repository function network element in this application may be respectively an AMF network element, an SMF network element, a UDM network element, and an NRF network element in a 5G system, or may be network elements that have functions of the AMF network element, the SMF network element, the UDM network element, and the NRF network element in future communication such as a 6G network. This is not limited in this application. In embodiments of this application, an example in which the AMF network element, the SMF network element, the UDM network element, and the NRF network element are respectively the mobility management network element, the session management network element, the data management network element, and the network repository function network element is used for description. In addition, the AMF network element, the SMF network element, the UDM network element, and the NRF network element are respectively referred to as an AMF, an SMF, a UDM, and an NRF for short.

For ease of description, in embodiments of this application, a specific example in which a base station and UE respectively serve as the access network device and the terminal device is used for description. A base station and UE that appear at any subsequent location may be respectively replaced with the access network device and the terminal device.

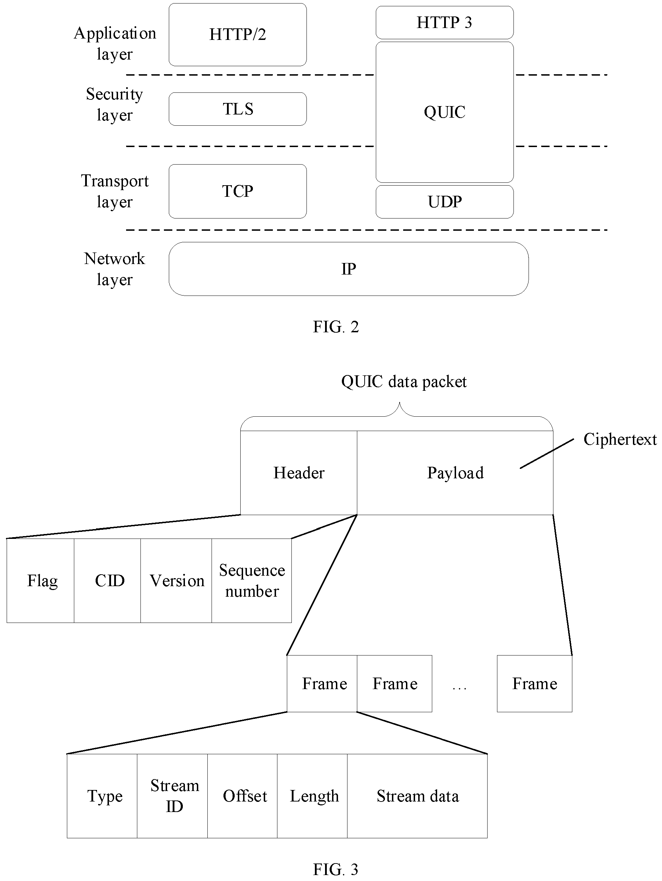

For ease of understanding content of this application, the following first describes a related background in embodiments of this application.
1. Quick UDP internet connections (quick UDP internet connections, QUIC) protocol:
   The QUIC protocol is a transmission protocol equivalent to the transmission control protocol (transmission control protocol, TCP). In a protocol stack structure shown in FIG. 2, the QUIC protocol is carried over a UDP protocol, and absorbs advantages of HTTP/2 API, TLS, and TCP in a design process. Objectives thereof are to optimize an overall delay and throughput, and improve performance during network switching.

As shown in FIG. 3, an encapsulation mode of a QUIC data packet includes a header and a payload (payload) (or referred to as load) part, and complies with a principle of payload encryption and greatest-extent header encryption, to avoid a problem such as analysis or interception performed by network middleware on network traffic, and enhance data transmission security.

The header includes a UDP header and a common (common) header, for example, includes at least one public flag (public flags), a connection identifier (connection ID, CID), a QUIC version (version), and a sequence number (sequence number). The CID may be used to associate same-link data.

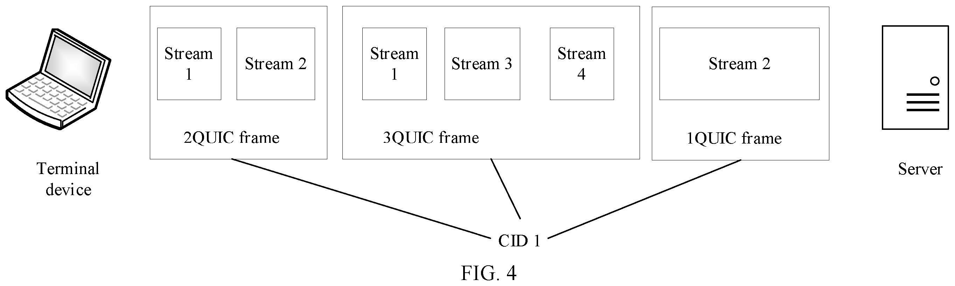

The payload part is an encrypted ciphertext, and may be used to encapsulate frame (frame) data of a plurality of streams (stream). A frame may include a type, a stream identifier, an offset (offset) value, a data length, stream data, and the like. For example, as shown in FIG. 4, an example in which a terminal device and a server respectively serve as a transmit end and a receive end of a QUIC data packet is used. For a QUIC connection between the terminal device and the server, a QUIC data packet 1, a QUIC data packet 2, and a QUIC data packet 3 may be associated based on a CID 1. Data of a stream 1 and a stream 2 may be encapsulated in a frame (for example, represented as a 2QUIC frame) of the QUIC data packet 1, data of the stream 1, the stream 2, and a stream 3 may be encapsulated in a frame (for example, represented as a 3QUIC frame) of the QUIC data packet 2, and data of the stream 2 may be encapsulated in a frame (for example, represented as a 1QUIC frame) of the QUIC data packet 3.

It should be understood that FIG. 3 and FIG. 4 show merely example descriptions of a packet format of a QUIC data packet rather than any limitation. A width of a rectangular box is merely an example, and does not represent a length of content in the data packet. For example, during specific implementation, the QUIC data packet may be a long-header data packet, or may be a short-header data packet. The long-header data packet includes a source CID field and a target CID field. A target CID is specified by a receiver and is used to provide stable routing for the data packet, and a source CID is used by a peer end to set the target CID. These fields may be used to set a CID of a new connection. The short-header data packet includes only a target CID and an explicit length is omitted. A length of a target CID field is considered to be known by a peer end.

### 2. QUIC tunnel and CID:

Each connection between a terminal device and a server is referred to as a QUIC connection (connection) or a QUIC tunnel ("tunnel" and "connection" may be used interchangeably below), which may generally have a group of CIDs, represented as CIDs. Each CID can identify the QUIC tunnel.

The CID may be independently selected by the terminal device, and each terminal device selects a CID for use by a peer end. A main function of the CID is to ensure that a data packet on a QUIC connection is not transmitted to an incorrect QUIC terminal device when an address change occurs in an underlying protocol (for example, a UDP protocol, an IP protocol, or a lower-layer protocol stack), so that perception-free connection migration of an application (application, APP) can be supported. The terminal device may select the CID in a manner of special implementation (and possibly special deployment), so that a data packet with the CID can be routed back to the terminal device, and can be correctly identified when being received.

The terminal device may maintain a CID set received from a peer end, and each CID may be used to send a QUIC data packet. The terminal device may limit use of the CID. For example, a same CID can be used only to send data packets from a same local address to a same destination address. When an address changes, the CID needs to be updated.

The terminal device may change, at any time during QUIC connection with the server, a CID for interaction between the terminal device and the peer end to another available CID. When the peer end performs connection migration, a CID published by the terminal device is consumed, that is, use of the CID is stopped. When the terminal device wants to stop use of a CID, the terminal device may send a CID cancellation frame to the peer end. Sending the CID cancellation frame means that the CID is not used again. In addition, the peer end is requested for a change to a new CID through a new CID frame.

For example, a long-header data packet is used as an example. During a handshake, a QUIC data packet with a long header is used to set a CID to be used by both ends. A source CID of each end is used as a target CID of a data packet sent to the end. After processing a first initial data packet, each end sets a target CID field value of a subsequently sent data packet to a source CID field value received by the end.

Embodiments of this application are concerned with only negotiation and use of a CID of a QUIC connection between UE and a RAN, and are not concerned with a data packet format.

### 3. QUIC path migration and QUIC multipath feature:

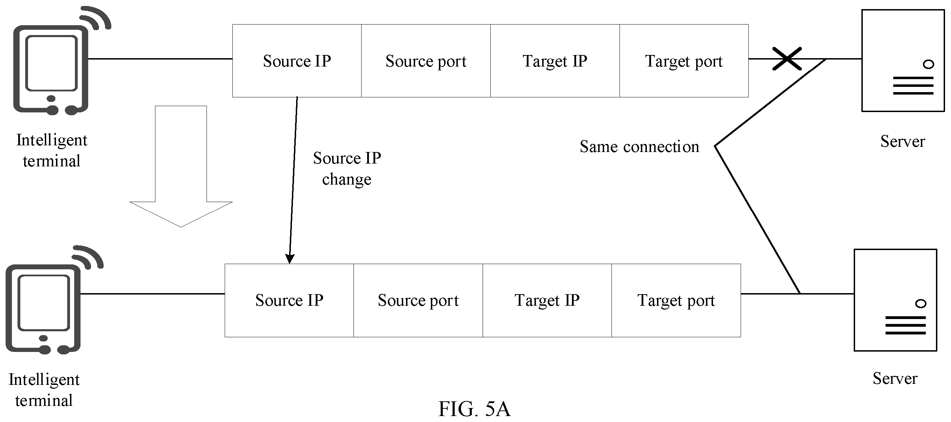

A target CID sent by a terminal device may change within a lifecycle of a QUIC connection, especially in response to connection migration. For a mobile communication network, QUIC has the following two features: QUIC path migration and QUIC multipath. The QUIC multipath feature has greater impact on the mobile communication network.
(1) QUIC path migration: is applicable to a case in which an IP address of UE changes because the UE moves or access (access) of the UE changes. For a TCP connection, after a communication 4-tuple (including a source IP, a source port (port), a destination IP, and a destination port) changes, the TCP connection is interrupted, and consequently an application layer service is interrupted, thereby affecting user experience. However, in a QUIC protocol, a concept of "connection" is used, and a CID is used. As long as the CID remains unchanged, even if a network is switched, it can be ensured that a connection is not interrupted. To be specific, such a connection between communication endpoints is not interrupted due to a change of a 4-tuple, and an application layer may not sense interruption of a protocol status of an underlying transmission protocol. Therefore, an application layer service is not interrupted, and user experience is not affected. As shown in FIG. 5A, different 4-tuples may correspond to one connection, and a change of any element (for example, a source IP change) in the 4-tuple does not affect an application layer service.
   ① Initiate connection migration: A terminal may migrate a connection by sending a data packet including a non-probe frame from a new local address.
   ② Respond to connection migration: A data packet including a non-probe frame is received from a new peer address, indicating that a peer end has migrated to the address. If a receiver acknowledges the migration, the receiver needs to change to send a subsequent data packet to the new peer address. In addition, if connection migration is not initiated, path verification (refer to the following explanation) needs to be initiated to verify ownership of the peer end for the address. If the receiver does not have an unused CID from the peer end, the receiver cannot send any data on a new path before the peer end provides a CID.

Each terminal verifies a peer address during connection establishment. Therefore, a terminal that is performing migration may send data to a peer end on the premise of learning that the peer end is willing to receive data at a current address of the peer end. As such, the terminal may migrate to a new local address without first verifying a peer address.

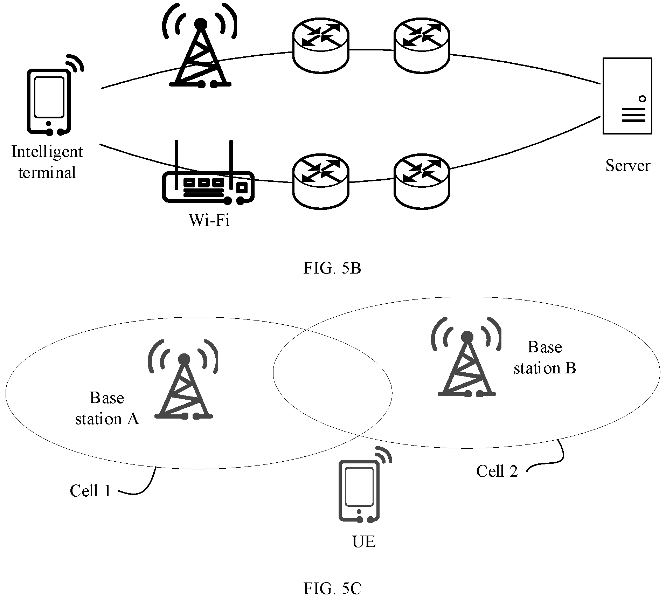

(2) QUIC multipath: is applicable when UE supports simultaneous access in a plurality of access technologies, or when UE supports dual active protocol stack (dual active protocol stack, DAPS, which is also referred to as 0-interruption seamless handover) handover in a movement process such as a handover (handover, HO) process, or when there may be a plurality of sessions. For example, in 5G session SSC mode 3, two session connections may be maintained at the same time when the UE is handed over. In this case, there may be a plurality of paths (path) from the UE to an application server (application server, AS). As shown in FIG. 5B, an intelligent terminal is connected to a server by using two access technologies, and there are two communication paths.

4. Access traffic steering, switching, and splitting (access traffic steering, switching, and splitting, ATSSS) rule:
The ATSSS rule specifies overall technical requirements for core network access traffic steering, switching, and splitting functions in a 5G mobile communication network, including new technical function requirements of network elements such as a PCF, an AMF, an SMF, a UPF, and an NRF relative to 5G network functions and interfaces.

An access traffic steering process is a stream steering process. An access network is selected for a new data stream, and traffic of the service stream is transmitted on the specified access network. Access traffic steering is applicable between 3rd generation partnership project (3rd generation partnership project, 3GPP) access and non-3GPP (Non-3GPP) access.

An access traffic switching process is a stream switching process. All traffic of an ongoing service stream is switched from one access network to another access network in a manner of maintaining service stream continuity. Access traffic switching is applicable between 3GPP access and non-3GPP access.

An access traffic splitting process is a stream division or segmentation process, and is a process of splitting a service data stream (dividing or segmenting the stream) among a plurality of access networks. When traffic splitting (stream division or segmentation) is applied to a data stream, some traffic of the data stream is transmitted through one access, and the other traffic of the same data stream is transmitted through another access. Access traffic splitting is applicable between 3GPP access and non-3GPP access.

In embodiments of this application, a terminal device may control traffic steering according to the ATSSS rule. For example, the terminal device determines, according to the ATSSS rule, that a data stream of a service is transmitted by using only a 3GPP access technology, or is transmitted by using only a non-3GPP access technology, or is transmitted by using both a 3GPP access technology and a non-3GPP access technology, that is, steered by using two access technologies.

### 5. Protocol data unit (protocol data unit, PDU) session:

One of key tasks of 5GS session management is to provide a terminal device with a data connection to a DN. To establish the connection from the terminal device to the DN, a PDU session needs to be established. The PDU session is a logical connection between the terminal device and a specific DN, and provides the terminal device with a user plane connection to the DN. A "PDU" is a basic user protocol type carried in the PDU session, and may be an IP data packet or an Ethernet frame depending on a PDU session type. Currently, a 5GS supports three PDU session types: an IP-based PDU session type, an Ethernet PDU session type, and an unstructured PDU session type. A "PDU" carried in an IP-based PDU session is an IP data packet, and a "PDU" carried in an Ethernet PDU session is an Ethernet frame. The 5GS does not interpret a "PDU" carried in an unstructured PDU session.

In a PDU session establishment process, a corresponding user plane connection between the terminal device and the DN is activated. The user plane connection provides PDU transmission between the terminal device and the DN, and carries actual data such as a voice and a video. One terminal device may request to simultaneously establish a plurality of PDU sessions, and the plurality of PDU sessions may be connected to different DNs. For example, when UE needs an Internet connection and an IMS service simultaneously, a PDU session from the terminal device to the Internet and a PDU session from the terminal device to an IMS may be simultaneously established. In addition, one terminal device may simultaneously request a single DN to establish a plurality of PDU sessions.

For a specific procedure of session establishment or modification, refer to a related procedure in 4.3 in the 3GPP standard protocol 23.502. Details are not described herein. In the following embodiments, only a PDU session scenario is used as an example of an application scenario of an improved QUIC protocol to describe implementation details of a QUIC protocol applicable to UE and an access network device. This does not constitute any limitation.

### 6. Dual connectivity (dual connection, DC):

The dual connectivity means that UE maintains connections to two access network devices at the same time. A DC technology is initially used to resolve a coverage problem for a user at a cell edge.

As shown in FIG. 5C, UE is located at an edge of a signal coverage area (represented as a cell 1) of a base station A. If only the base station A provides a network access service for the UE, signal strength may be insufficient, affecting service implementation on a UE side. In this case, a network service operator may deploy a base station B at the cell edge, and configure the base station A and the base station B into DC to enhance coverage. The UE maintains connections to both the base station A and the base station B.

In this embodiment of this application, only a DC scenario is used as an example of an application scenario of an improved QUIC protocol to describe implementation details of a QUIC protocol applicable to UE and an access network device. This does not constitute any limitation.

### 7. Xn handover and NG handover:

The NG handover is handover performed in a 4G LTE network, and NG represents a next generation. The NG handover is a handover mode based on an LTE technology, and is usually used in an LTE network. The NG handover can implement seamless handover from one base station to another base station, to provide better user experience and quality of service.

The Xn handover is handover performed in a 5G network, and Xn represents an extended network. The Xn handover is a handover mode based on a 5G technology, and is used in a 5G network. The Xn handover can implement handover from one 5G base station to another 5G base station or from 4G to 5G, to support a plurality of different scenarios and application requirements.

In this embodiment of this application, only a handover scenario is used as an example of an application scenario of an improved QUIC protocol to describe implementation details of a QUIC protocol applicable to UE and an access network device. This does not constitute any limitation.

A protocol stack between UE and an access network device (for example, a RAN) is complex. Especially when traffic data like a QUIC data packet is transmitted, a plurality of streams at an application layer are multiplexed (multiplex) into one QUIC data packet. As a result, an air interface cannot distinguish between data in a plurality of streams or datagrams (datagram) in the transmitted QUIC data packet.

Embodiments of this application provide a data transmission method, an apparatus, and a system, to design a QUIC protocol applicable to UE and an access network device, so as to better transmit QUIC-like traffic. The method and the apparatus are based on a same technical concept. Because problem-resolving principles of the method and the apparatus are similar, mutual reference may be made to implementations of the apparatus and the method, and repeated parts are not described again. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

It should be noted that, in embodiments of this application, "at least one" refers to one or more, and "a plurality of" refers to two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of objects, and are not used to limit priorities or importance of the plurality of objects. For example, a first access network device and a second access network device are merely used to distinguish between different access network devices, but do not indicate different priorities, importance, or the like of the two devices. For example, in some embodiments, method steps performed by the first access network device and the second access network device may be exchanged. For example, in a handover scenario, the first access network device may serve as a source access network device of UE, and the second access network device may serve as a target access network device of the UE. On the contrary, the first access network device may serve as a target access network device of the UE, and the second access network device may serve as a source access network device of the UE.

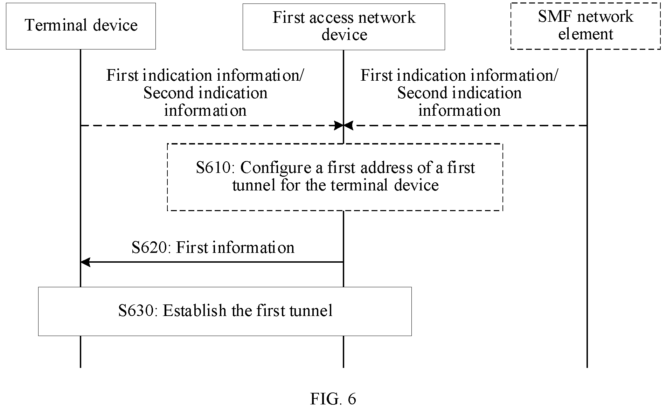

FIG. 6 is a schematic flowchart of a data transmission method according to an embodiment of this application. The method may be implemented by a terminal device and a network side device in collaboration. In different embodiments, specific implementations of the network side device may be different. For example, in a PDU session scenario, the network side device may include an SMF network element and the like. In a dual-connectivity (dual-connectivity, DC) scenario, the network side device may include at least one access network device. In a mobile handover scenario, the network side device may include a source access network device, a target access network device, and the like.

As shown in FIG. 6, the data transmission method may include the following steps.

S610 (optional step): A first access network device configures a first address of a first tunnel for the terminal device.

In this embodiment of this application, the first tunnel may use a first transport layer network protocol, and may be used to transmit data between the terminal device and the first access network device. It may be understood that there is a protocol function layer based on the first transport layer network protocol between the terminal device and the first access network device, or it may be understood that a reference point (reference point) protocol stack between the terminal device and the first access network device includes a first transport layer network protocol layer.

For example, the first transport layer network protocol may be the QUIC protocol described above, and the first tunnel is a QUIC tunnel, which is alternatively referred to as a QUIC connection. The first address includes an address that is of the first access network device and that is used to perform QUIC communication with the terminal device, for example, includes an IP address and a port number of the first access network device. In another implementation, the first transport layer network protocol may be another transport protocol having the function described in the present invention, or another transport layer network protocol like the QUIC protocol. The first address includes address information configured by the first access network device with respect to the corresponding protocol, or may be an address identifier for identifying a communication endpoint in the first transport layer network protocol or carry an address identifier of a communication endpoint in a lower-layer protocol of the first transport layer network protocol, for example, a tunnel identifier, a protocol layer identifier, a channel (channel) identifier, or a logical channel identifier. This is not limited in this embodiment of this application.

It should be noted that, in this embodiment of this application, "configure (provision, configure, or allocate)" may be replaced with "generate and send" or "allocate". For example, that the first access network device configures the first address for the terminal device may be specifically that the first access network device generates the first address for the terminal device, and sends the first address to the terminal device.

During specific implementation, the first access network device may be triggered in a plurality of manners to implement S610, to configure the first address of the first tunnel for the terminal device. Examples of triggering manners are described as follows:
(1) Manner 1: The first access network device receives first indication information, where the first indication information indicates that the terminal device supports the first transport layer network protocol, or the first indication information indicates that the terminal device supports multipath communication performed based on the first transport layer network protocol. During implementation of S610, the first access network device may configure the first address of the first tunnel for the terminal device based on the first indication information.

During specific implementation, based on different interaction processes in different implementations, the first indication information may be from the terminal device, or may be from a core network element.

For example, in Example 1 of Manner 1, the terminal device may send a first access stratum message to the first access network device, where the first access stratum message includes the first indication information. Correspondingly, the first access network device receives the first access stratum message from the terminal device, and obtains the first indication information from the first access stratum message. After accessing the first access network device, the terminal device may send the first access stratum message to the first access network device in a PDU session establishment process or after a PDU session is established.

The first access stratum message may be any uplink radio resource control (radio resource control, RRC) message from the terminal device, for example, a newly added uplink RRC message sent by the terminal device to the first access network device after the terminal device accesses the first access network device, and the uplink RRC message includes the first indication information.

Alternatively, for example, the first access stratum message may reuse an existing uplink RRC message between the terminal device and the first access network device. For example, the first indication information is carried in a reserved field of the existing uplink RRC message between the terminal device and the first access network device, or the first indication information is a replacement for another information element in an original uplink RRC message between the terminal device and the first access network device.

Alternatively, for example, in Example 2 of Manner 1, the core network element may send the first indication information to the first access network device, and the first indication information may be included in a control message sent by the core network element to the first access network device. Correspondingly, the first access network device receives the control message from the core network element, and obtains the first indication information from the control message. The core network element may send the control message to the first access network device in a PDU session establishment process or after a PDU session is established.

During specific implementation of Example 2 of Manner 1, the control message may be a newly added control message between the core network element and the first access network device. Alternatively, the control message may reuse an existing control message between the core network element and the first access network device.

For example, the core network element may be an SMF network element, the control message may be implemented as a newly added control message from the SMF network element, and the newly added control message includes the first indication information, to directly or indirectly indicate the first access network device to configure the first address of the first tunnel for the terminal device. Alternatively, the control message may be implemented as an Nx session message from the SMF network element, to indicate to establish a PDU session for the terminal device. The first indication information may be carried in a reserved field or a newly added information element or container of the Nx session message, or may be a replacement for another information element originally carried in the Nx session message.

The core network element may learn of a tunnel capability of the terminal device when exchanging information with the terminal device, the first access network device, or another core network element.

For example, the terminal device includes the first indication information in a first non-access stratum message sent to the core network element. For example, the terminal device includes the first indication information in a (PDU) session message sent to an AMF network element through an N1 interface, the AMF network element may forward the (PDU) session message to an SMF network element through an N11 interface, and the SMF network element obtains the first indication information from the (PDU) session message from the AMF network element. The SMF network element may send the first indication information to the first access network device.

Alternatively, for example, the terminal device includes the first indication information in a (PDU) session message sent to the first access network device, the first access network device forwards the (PDU) session message to an AMF network element through an N2 interface, the AMF network element forwards the (PDU) session message to an SMF network element through an N11 interface, and the SMF network element obtains the first indication information from the (PDU) session message from the AMF network element. The SMF network element may send the first indication information to the first access network device. It should be understood that in the interaction process herein, the first access network device is only a transparent transmission node of the (PDU) session message, and does not parse the session message.

(2) Manner 2: The first access network device receives second indication information, where the second indication information indicates to establish the first tunnel between the terminal device and the first access network device. For example, the second indication information may be a request indicator (request indicator), indicating a request or a need to establish a tunnel between the terminal device and the first access network device. For example, the second indication information is requirement description information, indicating that there is a requirement for a stable latency, thereby implicitly indicating to establish the first tunnel between the terminal device and the first access network device. During implementation of S610, the first access network device may configure the first address of the first tunnel for the terminal device based on the second indication information.

During specific implementation, based on different interaction processes in different implementations, the second indication information may be from the terminal device, or may be from a core network element.

For example, in Example 1 of Manner 2, the terminal device may send a second access stratum message to the first access network device, where the second access stratum message includes the second indication information. Correspondingly, the first access network device may receive the second access stratum message from the terminal device, and obtain the second indication information from the second access stratum message. After accessing the first access network device, the terminal device may send the second access stratum message to the first access network device in a PDU session establishment process or after a PDU session is established.

The second access stratum message may be any uplink RRC message from the terminal device, for example, a newly added uplink RRC message sent by the terminal device to the first access network device after the terminal device accesses the first access network device, and the uplink RRC message includes the second indication information.

Alternatively, for example, the second access stratum message may reuse an existing uplink RRC message between the terminal device and the first access network device. For example, the second indication information is carried in a reserved field or a newly added information element or container of the existing uplink RRC message between the terminal device and the first access network device, or the second indication information is a replacement for another information element in the existing uplink RRC message between the terminal device and the first access network device.

Alternatively, for example, in Example 2 of Manner 2, the core network element may send a control message to the first access network device, and the control message may include the second indication information. Correspondingly, the first access network device receives the control message from the core network element, and obtains the second indication information from the control message.

During specific implementation of Example 2 of Manner 2, the control message may be a newly added control message between the core network element and the first access network device. Alternatively, the control message may reuse a control message between the core network element and the first access network device.

For example, the core network element may be an SMF network element, and the control message may be implemented as a newly added control message from the SMF network element, and include the second indication information, to directly or indirectly indicate the first access network device to configure the first address of the first tunnel for the terminal device. Alternatively, the control message may be implemented as an Nx session message from the SMF network element, to indicate to establish a PDU session for the terminal device. The second indication information may be carried in a reserved field or a newly added information element or container of the Nx session message, or may be a replacement for another information element originally carried in the Nx session message.

The core network element may learn of a tunnel capability of the terminal device when exchanging information with the terminal device, the first access network device, or another core network element.

For example, the terminal device includes the second indication information in a second non-access stratum message sent to the core network element. For example, the terminal device includes the second indication information in a (PDU) session message sent to an AMF network element through an N1 interface, the AMF network element may forward the (PDU) session message to an SMF network element through an N11 interface, and the SMF network element obtains the second indication information from the (PDU) session message from the AMF network element. The SMF network element may send the second indication information to the first access network device. That the SMF network element sends the second indication information to the first access network device may also be understood as that the SMF network element may determine whether the first tunnel needs to be established between the terminal device and the first access network device, and then send the second indication information to the first access network device.

For example, the SMF network element may determine whether the first tunnel needs to be established between the terminal device and the first access network device. For example, in a PDU session establishment process or after a PDU session is established, the SMF network element may determine, in a process of interacting with the terminal device, the first access network device, or another core network element, whether the first tunnel needs to be established between the terminal device and the first access network device. If the SMF network element determines that the first tunnel needs to be established between the terminal device and the first access network device, the SMF network element may indicate the first access network device to configure the first address of the first tunnel for the terminal device.

For example, the SMF network element may receive first indication information from the terminal device, where the first indication information indicates that the terminal device supports the first transport layer network protocol, or the first indication information indicates that the terminal device supports multipath communication performed based on the first transport layer network protocol. The SMF network element may determine, based on the first indication information, that the first tunnel needs to be established between the terminal device and the first access network device.

Alternatively, the SMF network element may further determine, based on at least one of the following information, that the first tunnel needs to be established between the terminal device and the first access network device:
(1) Subscription information of the terminal device: The SMF network element may obtain the subscription information of the terminal device from a UDM network element. If the subscription information indicates that the terminal device needs a stable latency, the subscription information indicates that establishment of the first tunnel between the terminal device and the first access network device is allowed, and the SMF network element may determine that the first tunnel needs to be established between the terminal device and the first access network device.
(2) DNN/Slice information: The SMF network element may obtain the DNN/slice information from a session (for example, a PDU session) request from the terminal device. If a service corresponding to the DNN/slice has a requirement for a stable latency or a requirement for the first tunnel, the SMF network element may determine that the first tunnel needs to be established between the terminal device and the first access network device.
(3) Policy information of a PCF network element: The SMF network element may obtain the policy information from the PCF network element. If the policy information indicates that a session (for example, a PDU session) of the terminal device has a requirement for a stable latency or a requirement for the first tunnel, the SMF network element may determine that the first tunnel needs to be established between the terminal device and the first access network device.
(4) Second indication information from the terminal device: The second indication information indicates to establish the first tunnel between the terminal device and the first access network device.

It should be understood that the foregoing is merely an example rather than any limitation for information used by the SMF network element to determine whether the first tunnel needs to be established between the terminal device and the first access network device. In another embodiment, the SMF network element may alternatively determine, by using other information, whether the first tunnel needs to be established between the terminal device and the first access network device. Details are not described herein.

In this embodiment of this application, the SMF network element indicates the first access network device to configure the first address of the first tunnel for the terminal device. For example, the SMF network element may send fourth indication information to the first access network device, and the fourth indication information may indicate to configure the first address of the first tunnel.

In an example, the fourth indication information may be carried in, for example, a control message sent by the SMF network element to the first access network device, and the control message includes the fourth indication information. Similarly, the control message may be a newly added control message between the SMF network element and the first access network device, or may reuse an existing message between the SMF network element and the first access network device. The fourth indication information may be carried in a reused existing control message. For example, the fourth indication information may be carried in a reserved field of the existing control message, or the fourth indication information may be a replacement for another information element in the existing control message. The first access network device may configure the first address for the terminal device based on the fourth indication information, and feed back the first address as a response example for the fourth indication information to the SMF network element. For example, the first access network device may send first information to the SMF network element, and the first information indicates an address of the first tunnel.

In another example, the fourth indication information may be carried in, for example, an Nx session message sent by the SMF network element to the first access network device. The first access network device may configure the first address for the terminal device based on the fourth indication information, and send the first information to the terminal device.

In an optional implementation, the SMF network element may further send attribute information of the first tunnel to the first access network device. During specific implementation, the fourth indication information may further indicate the attribute information of the first tunnel. Alternatively, the attribute information of the first tunnel and the attribute information of the first tunnel may be carried in a same message from the SMF network element, but are different indication information. Alternatively, the attribute information of the first tunnel and the fourth indication information may be carried in different control messages or Nx session messages. A manner of carrying the fourth indication information and the attribute information of the first tunnel is not limited in this embodiment of this application.

In another optional implementation, a default attribute of the first tunnel may be further agreed on in the first transport layer network protocol, and the SMF network element and/or the first access network device may determine the default attribute as an attribute of the first tunnel based on the agreement in the protocol. If the SMF network element determines the attribute of the first tunnel, the SMF network element may send the attribute information of the first tunnel to the first access network device, for example, send the attribute information of the first tunnel to the first access network device in a manner similar to the foregoing manner of sending the fourth indication information. If the first access network device determines the attribute of the first tunnel, the first access network device may send the attribute information of the first tunnel to the SMF network element, for example, send the attribute information of the first tunnel to the SMF network element in a manner similar to the foregoing manner of sending the response example for the fourth indication information. Alternatively, the first access network device may send the attribute information of the first tunnel to the terminal device. For example, when the first information is sent to the terminal device, the first information may include the attribute information of the first tunnel. Details are described below, and details are not described herein.

Alternatively, for example, the terminal device includes the second indication information in a (PDU) session message sent to the first access network device, the first access network device forwards the (PDU) session message to an AMF network element through an N2 interface, the AMF network element forwards the (PDU) session message to an SMF network element through an N11 interface, and the SMF network element obtains the second indication information from the (PDU) session message from the AMF network element. The SMF network element may send the second indication information to the first access network device. For example, in a process of interacting with the terminal device, the first access network device, or another core network element, the SMF network element sends the second indication information to the first access network device when determining, based on information from the terminal device, the first access network device, or the another core network element, that the first tunnel needs to be established between the terminal device and the first access network device. For specific implementation details, refer to the foregoing descriptions. Details are not described herein again. It should be understood that, in the interaction process herein, the first access network device is only a transparent transmission node of the (PDU) session message, and does not parse the session message. Therefore, the first access network device does not parse the (PDU) session message from the terminal device to obtain the second indication information, but the second indication information needs to be delivered via the SMF network element.

It should be understood that the first indication information and the second indication information may be sent by the terminal device to the access network device in same AS signaling, or may be sent by the core network element to the access network device in a same control message. In this case, the first access stratum message and the second access stratum message may be a same message. Alternatively, the first indication information and the second indication information may be sent by the terminal device to the access network device in different AS signaling at different moments, or may be sent by the core network element to the access network device in different control messages at different moments. This is not limited in this embodiment of this application.

Dashed-line arrows and dashed-line boxes in FIG. 6 represent optional steps/nodes. The following describes procedure details in the foregoing different triggering manners with reference to different embodiments and accompanying drawings, and details are not described herein. When the first indication information or the second indication information is from the core network element, the first access network device may determine, based on the first transport layer network protocol and received related indication information, whether the first address of the first tunnel configured for the terminal device needs to be sent to the core network element. For details, refer to the following detailed descriptions with reference to different embodiments. Details are not described herein.

S620: The first access network device sends the first information to the terminal device, where the first information indicates the first address of the first tunnel. Correspondingly, the terminal device may receive the first information.

For example, the first information may be carried in a downlink control message, for example, a downlink RRC message, from the first access network device. The following uses an RRC message as an example for description.

According to different manners of triggering configuration of the first address described during implementation of S610, the downlink RRC message that carries the first information may be a response of the first access network device to the first access stratum message from the terminal device, or the downlink RRC message that carries the first information may be a corresponding control message sent by the first access network device to the terminal device based on a related message or related indication information from the core network element.

For example, the SMF network element may request the first information from the first access network device. After the first access network device feeds back the first information to the SMF network element, the SMF network element may include the first information in a control message sent to the terminal device. For example, as described above, the SMF network element may send the second indication information to the first access network device, to indicate a request or a need to establish a tunnel between the terminal device and the first access network device. The first access network device may configure the first address for the terminal device based on the second indication information, and feed back the first information as response information for the second indication information to the SMF network element. Further, the SMF network element may include the first information in the control message sent to the terminal device.

In other words, in this embodiment of this application, the first access network device may directly send the first information to the terminal device, or may indirectly send the first information to the terminal device. This is not limited in this embodiment of this application. An arrow corresponding to S620 in FIG. 6 only indicates that the first access network device may send the first information to the terminal device, and does not limit a delivery manner of the first information. In another embodiment, for example, the first access network device may send the first information to the terminal device through another core network element. Details are not described herein.

S630: The terminal device establishes the first tunnel with the first access network device based on the first address.

In this embodiment of this application, S630 may be initiated by the terminal device, or S630 may be initiated by the first access network device. This is not limited in this embodiment of this application.

For example, the terminal device initiates S630. S630 may include, for example, the following steps.

S631a: The terminal device sends, to the first access network device based on the first address, an uplink initial data packet using the first transport layer network protocol. A destination address of the initial data packet may be set to the received first address. A source protocol address of the first transport layer network protocol of the initial data packet, also referred to as a source connection identifier (source connection identifier, SCID), is set to C1, and C1 is generated by the terminal device. Because no initial data packet or retry data packet is received from the first access network device before the initial packet, the terminal device generates an unpredictable value S1 to fill a destination protocol address of the to-be-sent initial packet using the first transport layer network protocol, which may also be referred to as a destination connection identifier (destination connection identifier, DCID). The terminal device sends the initial data packet to the first access network device.

S632b: After receiving the initial data packet from the terminal device, the first access network device parses the initial data packet to obtain C1, and uses C1 as a destination protocol address of a downlink data packet to be sent to the terminal device, and the first access network device generates a source protocol address S3 of the downlink data packet. The first access network device sends a downlink initial data packet to the terminal device. A destination protocol address (DCID) of the downlink initial data packet is the source protocol address C1 of the terminal device, and a source protocol address of the downlink initial data packet is the source protocol address S3 generated by the first access network device.

S633c: The terminal device receives the downlink initial data packet from the first access network device, and obtains the destination protocol address S3 of the downlink initial data packet from the downlink initial data packet. Subsequently, the terminal device sends, to the first access network device by using S3 as a destination protocol address, a first transport layer network protocol data packet that carries upper-layer protocol data. For the QUIC protocol, the upper-layer protocol data is a 1-RTT data part.

S634d: If 1-RTT data sent by the terminal device is received, the first access network device uses C1 as a destination protocol address, and sends, to the terminal device, a first transport layer network protocol data packet that carries upper-layer protocol data.

In this way, the terminal device and the first access network device complete negotiation on a communication identifier and an address that are implemented based on the first tunnel, and complete a process of establishing the first tunnel.

In an optional implementation, the terminal device and the first access network device may alternatively negotiate a CID by using a retry data packet. This process may include the following steps.

S631b: The terminal device sends, to the first access network device based on the first address, an uplink initial data packet using the first transport layer network protocol. A destination address of the initial data packet is set to the received first address. A source protocol address of the first transport layer network protocol of the initial data packet is set to C1, and C1 is generated by the terminal. Because no initial data packet or retry data packet is received from the first access network device before the initial packet, the terminal device generates an unpredictable value S1 to fill a destination protocol address of the to-be-sent initial packet. The terminal device sends the initial data packet to the first access network device.

S632b: After receiving the initial data packet from the terminal device, the first access network device parses the initial data packet to obtain C1, and uses C1 as a destination protocol address of a downlink data packet to be sent to the terminal device, and the first access network device generates a source protocol address S2 of the downlink data packet. The first access network device sends a downlink retry data packet to the terminal device. A destination protocol address (DCID) of the downlink retry data packet is the source protocol address C1 of the terminal device, and a source protocol address of the downlink retry data packet is the source protocol address S2 generated by the first access network device.

S633b: The terminal device receives the retry data packet, and sends an initial data packet again, where a destination protocol address (DCID) of the initial data packet is the source protocol address C1 of the terminal device, and a source protocol address of the initial data packet is the source protocol address S2 generated by the first access network device.

S634b: After receiving the initial data packet from the terminal device, the first access network device parses the initial data packet to obtain C1, and uses C1 as a destination protocol address of a downlink data packet to be sent to the terminal device, and the first access network device generates a source protocol address S3 of the downlink data packet. The first access network device sends a downlink initial data packet to the terminal device. A destination protocol address (DCID) of the downlink initial data packet is the source protocol address C1 of the terminal, and a source protocol address of the downlink initial data packet is the source protocol address S3 generated by the first access network device.

S635b: The terminal device receives the downlink initial data packet from the first access network device, and obtains the destination protocol address S3 of the downlink initial data packet from the downlink initial data packet. Subsequently, the terminal device sends, to the first access network device by using S3 as a destination protocol address, a first transport layer network protocol data packet that carries upper-layer protocol data. For the QUIC protocol, the upper-layer protocol data is a 1-RTT data part.

S636b: If 1-RTT data sent by the terminal device is received, the first access network device uses C1 as a destination protocol address, and sends, to the terminal device, a first transport layer network protocol data packet that carries upper-layer protocol data.

In this way, the terminal device and the first access network device complete negotiation on a communication identifier and an address that are implemented based on the first tunnel, and complete a process of establishing the first tunnel.

In an optional implementation, the terminal device may further obtain attribute information of the first tunnel. During implementation of S630, the terminal device may establish the first tunnel with the first access network device based on the first address and the attribute information of the first tunnel.

In an example, a default attribute of the first tunnel may be agreed on in the first transport layer network protocol, and the terminal device may determine that the default attribute is the attribute information of the first tunnel. Alternatively, the attribute information of the first tunnel may be configured by the first access network device. For example, the first information sent by the first access network device to the terminal device may further include the attribute information of the first tunnel. Alternatively, for example, the first access network device may include the attribute information of the first tunnel in AS signaling that carries the first information. The first access network device may send the attribute information of the first tunnel to the terminal device by using independent AS signaling. The AS signaling is different from the AS signaling that carries the first information. An implementation in which the terminal device obtains the attribute information of the first tunnel is not limited in this embodiment of this application.

Similarly, if S630 is initiated by the first access network device, the first access network device may also obtain the attribute information of the first tunnel. A default attribute of the first tunnel may be agreed on in the first transport layer network protocol, and the first access network device may determine, based on the received first indication information, that the default attribute is the attribute information of the first tunnel. Alternatively, the first access network device may determine, based on the fourth indication information from the core network element, that the default attribute is the attribute information of the first tunnel, where the fourth indication information indicates to configure the first address of the first tunnel. Alternatively, the attribute information of the first tunnel may be configured by the core network element. The "configuration" herein may be understood as being generated and sent by the core network. For example, the core network element determines an attribute of the first tunnel, and sends the attribute information of the first tunnel to the first access network device. The attribute information of the first tunnel may be carried in a corresponding control message sent by the core network to the first access network device, and the first access network device may obtain the attribute information of the first tunnel from the control message. It should be understood that the core network element herein may include an SMF network element, or may include another core network element. When interacting with different core network elements, the first access network device may receive different control messages that carry the attribute information of the first tunnel. This is not limited in this embodiment of this application.

In an optional implementation, the data transmission solution in this embodiment of this application may be further applied to a DC scenario. In the DC scenario, the first access network device may be used as a master node (master node, MN), and the second access network device may be used as a secondary node (secondary node, SN). The first transport layer network protocol may support a multipath feature, and the first tunnel may include at least one communication path, for example, a first communication path between the terminal device and the first access network device, and a second communication path between the terminal device and the second access network device. To enable the terminal device to perform data transmission with both the first access network device and the second access network device based on different communication paths, the first access network device further needs to exchange information with the terminal device or the second access network device, so that the three parties know a part or all of information about the second communication path of the first tunnel, to facilitate communication between the terminal device and the second access network device based on information about the second communication path of the first tunnel.

For example, the information about the second communication path may include a second identifier and a second address of the first tunnel, and the second identifier and the second address are associated with the second access network device. The information about the second communication path may further include a fourth identifier and a fourth address of the first tunnel, and the fourth identifier and the fourth address are associated with the terminal device.

The first access network device may send Xn signaling to the second access network device, to indicate the second access network device to configure (or allocate or generate) the second identifier and/or the second address of the first tunnel. The first access network device may send the Xn signaling to the second access network device on any one of the following occasions: when the first indication information from the terminal device is received, when the second indication information from the terminal device is received, when the first indication information from the core network element is received, when the second indication information from the core network element is received, or when the fourth indication information from the core network element is received. A trigger occasion of the Xn signaling is not limited in this embodiment of this application.

In an example, the first access network device may allocate the second identifier to the first tunnel. The first access network device may include the second identifier in the Xn signaling sent to the second access network device, to indicate the second access network device to configure the second address of the first tunnel for the first tunnel. Alternatively, it may be understood that the Xn signaling carrying the second identifier indicates the second access network device to configure the second address of the first tunnel for the terminal device. The second identifier and the second address are associated with the second access network device, which may also be understood as that the second address is used to transmit data between the terminal device and the second access network device based on the first tunnel. In an optional implementation, the Xn signalling from the first access network device further includes a tunnel identifier and address information that are of the terminal device, which are represented as the fourth identifier and the fourth address. Alternatively, the first access network device may send the fourth identifier and the fourth address of the terminal device to the second access network device in a separate Xn signalling. An occasion on which the first access network device publishes the fourth identifier and the fourth address to the second access device is not limited in this embodiment of this application.

Optionally, the second access network device may send the second address to the first access network device. Optionally, the second access network device may further carry the second identifier when sending the second address. Specifically, for example, the second access network device may send the second address in a response message to the Xn signaling sent by the first access network device, or send the second address and the second identifier in a response message to the Xn signaling sent by the first access network device. It should be noted that, in this embodiment of this application, whether the second access network device sends the second address or the second identifier to the first access network device is related to an initiator of a process of adding the second communication path to the first tunnel. A design at a communication system level may be used. For example, the MN initiates a path addition process, the SN initiates a path addition process, or the terminal device initiates a path addition process. For example, if the MN initiates addition of the second communication path, the SN needs to send the second address or send the second address and the second identifier to the MN. If the SN initiates addition of the second communication path, the SN does not need to additionally send the second address to the MN, or does not need to additionally send the second address and the second identifier to the MN, but may synchronize the information about the second communication path to the MN when the SN initiates addition of the second communication path, where the information about the second communication path may include the second identifier and/or the second address. In an optional implementation, a node that initiates path addition may be dynamically specified in the communication system. In this case, for example, the MN may determine the node that initiates path addition. If the MN chooses to autonomously initiate path addition, a message sent to the SN may indicate, by default, that the SN needs to return the second identifier and/or the second address. If the MN chooses the SN to initiate path addition, the MN may indicate, in a message sent to the SN, the SN to initiate subsequent path addition. For example, the indication may be indicated by the fourth identifier and the fourth address of the terminal device, or there is independent indication information used to request the SN to initiate path addition. In this case, the SN does not return the second identifier and/or the second address to the MN, but autonomously initiates addition of the second communication path based on the received information. For implementation details of the process of adding the second communication path (that is, updating an identifier and an address of a data packet), refer to the following description. Details are not described herein.

In another example, the first access network device may send Xn signaling to the second access network device, to indicate the second access network device to configure the second identifier and the second address of the first tunnel. Alternatively, it may be understood that the Xn signaling indicates the second access network device to configure the second identifier and the second address of the first tunnel for the terminal device, and the second identifier and the second address are associated with the second access network device. Optionally, the Xn signalling from the first access network device may further include a tunnel identifier and address information of the terminal device, which are represented as the fourth address and the fourth identifier. Alternatively, the first access network device may send the fourth identifier and the fourth address of the terminal device to the second access network device in a separate Xn signalling. An occasion on which the first access network device publishes the fourth identifier and the fourth address to the second access device is not limited in this embodiment of this application.

Optionally, the second access network device may send the second identifier and the second address to the first access network device. For example, the second access network device may send the second address and the second identifier in a response message to the Xn signaling sent by the first access network device. Similarly, for whether the second access network device sends the second address and the second identifier to the first access network device, refer to related descriptions in the foregoing embodiment. For implementation details of the process of adding the second communication path, refer to the following description. Details are not described herein.

In another example, the first access network device may send Xn signaling to the second access network device, to indicate the second access network device to configure the second identifier of the first tunnel. Alternatively, it may be understood that the Xn signaling indicates the second access network device to configure the second identifier of the first tunnel for the terminal device. Optionally, the Xn signalling from the first access network device may further include a tunnel identifier and address information of the terminal device, which are represented as the fourth identifier and the fourth address. Alternatively, the first access network device may send the fourth identifier and the fourth address of the terminal device to the second access network device in a separate Xn signalling. An occasion on which the first access network device publishes the fourth identifier and the fourth address to the second access device is not limited in this embodiment of this application. It should be understood that, in this example, the process of adding the second communication path may be initiated by the SN by default. For implementation details of the path addition process, refer to the following description. Details are not described herein.

In another example, the first access network device may send Xn signaling to the second access network device. The Xn signaling includes the fourth identifier and the fourth address of the terminal device. For example, the terminal device may include the fourth identifier and the fourth address of the terminal device in uplink AS signaling sent to the first access network device, and the first access network device may obtain the fourth identifier and the fourth address of the terminal device from the uplink AS signaling. Alternatively, the terminal device may include the fourth identifier and the fourth address in control information sent to the second access network device through the first tunnel, and the first access network device obtains the fourth identifier and the fourth address of the terminal device from the control information of the first tunnel. Alternatively, the terminal device may send an uplink data packet to the first access network device, where the uplink data packet may include the fourth identifier and the fourth address of the first tunnel, and the first access network device may obtain the fourth identifier and the fourth address from the uplink data packet. The fourth identifier and the fourth address are associated with the second communication path. It should be noted that the fourth address may also be associated with the first communication path, that is, it is understood that the first identifier and the fourth address are associated with the first communication path. Optionally, the Xn signaling may trigger the second access network device to add the second communication path. For implementation details of the process of adding the second communication path, refer to the following description. Details are not described herein.

It should be understood that, in the foregoing description, the "indication" may also be equivalently understood as a "request". A meaning of the Xn signaling is not specifically limited in this embodiment of this application.

To enable the second access network device and the terminal device to communicate with each other based on the second communication path of the first tunnel, before data transmission is performed between the terminal device and the second access network device, the second communication path further needs to be added to the first tunnel. In this embodiment of this application, the process of adding the second communication path to the first tunnel may be initiated by the first access network device, or may be initiated by the second access network device, or may be initiated by the terminal device.

The following describes examples of interaction processes involved when different initiators add the second communication path.

For example, the first access network device initiates the process of adding the second communication path to the first tunnel. The first access network device may obtain the information about the second communication path in a previous process of interacting with the terminal device and the second access network device, and initiate the process of adding the second communication path to the first tunnel.

The first access network device may receive second information of the first tunnel from the second access network device. The second information may include the second identifier of the first tunnel, or the second information may include the second address of the first tunnel, or the second information may include the second identifier and the second address of the first tunnel. According to the solution described above, if the first access network device configures the second identifier for the second access network device, the second information from the second access network device may include the second address. If the second access network device configures the second identifier and the second address, the second information from the second access network device may include the second identifier and the second address.

When initiating the process of adding the second communication path to the first tunnel, the first access network device may send the second identifier to the terminal device or send the second identifier and the second address to the terminal device before adding the second communication path. Specifically, in an example, the first access network device may send a third access stratum message to the terminal device. The third access network message may include the second identifier, or the third access network message may include the second identifier and the second address. In another example, the first access network device may send first control information to the terminal device through the first tunnel. Specifically, the first access network device may send the first control information to the terminal device through the first communication path of the first tunnel. The first control information may include the second identifier, or the first control information may include the second identifier and the second address. In another example, the first access network device may further send a downlink data packet to the terminal device, where the downlink data packet includes the second identifier and the second address of the first tunnel.

Then, the first access network device sends a downlink data packet to the terminal device, where the downlink data packet includes the fourth identifier and the fourth address of the terminal device, and the second identifier and the second address, and the downlink data packet is used to add the second communication path. After receiving the downlink data, the terminal device may send an uplink data packet to the second access network device. The uplink data packet includes the fourth identifier and the fourth address of the terminal device, and the second identifier and the second address. When the terminal device sends the uplink data packet, it indicates that the terminal device accepts the second communication path. Then, the second access network device may send a subsequent downlink data packet to the terminal device, to implement data transmission with the terminal device. In this case, the first access network device and the second access network device need to share information such as a packet space, a path identifier, a packet sequence number, and a congestion window on the second communication path. For example, the first access network device may further send the information about the second communication path to the second access network device. The information about the second communication path may include, for example, a packet number space, a path identifier, a packet sequence number, and a congestion window that are associated with a data packet transmitted between the terminal device and the second access network device. The first access network device may send Xn signaling to the second access network device, and the Xn signaling may include the information about the second communication path.

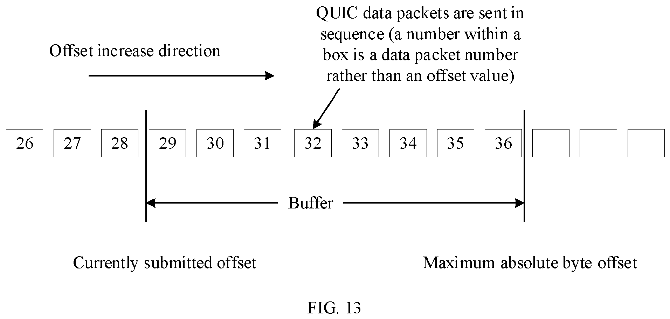

In an optional implementation, the first access network device and the second access network device further need to share a context of the first tunnel, and the context of the first tunnel may include at least one of the following information: a QUIC configuration/attribute and a security context;
a number of a last packet received/sent on uplink/downlink by using the QUIC protocol;
a Stream/Connection stream control status: per stream offset of data consumed;
a buffer status, as shown in FIG. 13; and
a multipath status: a PID, a PN, and a packet number of a last packet that has been sent/received on each communication path.

For example, the second access network device initiates the process of adding the second communication path to the first tunnel. The second access network device may obtain, in a process of interacting with the terminal device and the first access network device, information, associated with the terminal device, about the second communication path, and initiate the process of adding the second communication path to the first tunnel.

For example, the first access network device may send sixth indication information to the second access network device. The sixth indication information may indicate the fourth identifier of the first tunnel, or the sixth indication information indicates the fourth identifier and the fourth address of the first tunnel. The sixth indication information may be carried in Xn signaling from the first access network device. In other words, according to the solution described above, the first access network device may trigger, when sending information about the terminal device to the second access network device, the process of adding the second communication path to the first tunnel.

Optionally, before initiating addition of the second communication path to the first tunnel, in an implementation, the second access network device may directly send the second identifier to the terminal device, or directly send the second identifier and the second address to the terminal device. In another implementation, the second access network device may send the second identifier to the terminal device through the first access network device, or send the second identifier and the second address to the terminal device through the first access network device. Specifically, the second access network device may send the second identifier to the first access network device, or send the second identifier and the second address to the first access network device. For example, the second access network device may include the second identifier or the second identifier and the second address in Xn signaling or a response message to Xn signaling that is sent to the first access network device. The first access network device sends the second identifier or the second identifier and the second address to the terminal device based on the received information.

Then, the second access network device may send a downlink data packet to the terminal device, where the downlink data packet includes the fourth identifier and the fourth address of the terminal device, and the second identifier and the second address, and the downlink data packet is used to add the second communication path. After receiving the downlink data packet, the terminal device sends an uplink data packet to the second access network device. The uplink data packet includes the fourth identifier and the fourth address of the terminal device, and the second identifier and the second address. When the terminal device sends the uplink data packet, it indicates that the terminal device accepts the second communication path. Then, the second access network device may send a subsequent downlink data packet to the terminal device, to implement data transmission with the terminal device. In this case, the first access network device and the second access network device need to share information such as a packet space, a path identifier, a packet sequence number, and a congestion window on the second communication path. For example, the second access network device may further send the information about the second communication path to the first access network device. The information about the second communication path may include, for example, a packet number space, a path identifier, a packet sequence number, and a congestion window that are associated with a data packet transmitted between the terminal device and the second access network device. The second access network device may send Xn signaling to the first access network device, and the Xn signaling may include the information about the second communication path.

In an optional implementation, the first access network device and the second access network device further need to share a context of the first tunnel. For content of the context of the first tunnel, refer to the foregoing related descriptions. Details are not described herein again.

For example, the terminal device initiates the process of adding the second communication path to the first tunnel. The terminal device may receive the second identifier and/or the second address from the first access network device or the second access network device. The terminal device may receive the second identifier or receive the second identifier and the second address in AS signaling from the first access network device. Alternatively, the terminal device may receive the second identifier or receive the second identifier and the second address by using control information on the first communication path of the first tunnel. Alternatively, the terminal device may receive the second identifier and the second address in AS signaling from the second access network device. A manner in which the terminal device obtains the second identifier and/or the second address is not limited in this embodiment of this application.

Further, the terminal device may initiate, by sending an uplink data packet to the second access network device, the process of adding the second communication path. The uplink data packet may include the second identifier and the second address. Alternatively, the uplink data packet may further include the fourth identifier and the fourth address, and the fourth identifier and the fourth address are associated with the terminal device.

After the second communication path is successfully added, data transmission may be performed between the terminal device and the second access network device based on the second communication path. For example, the terminal device may send an uplink data packet to the second access network device, and the uplink data packet may include a destination identifier and a destination address, for example, the second identifier and the second address. Alternatively, the uplink data packet may further include a source identifier and a source address, for example, the fourth identifier and the fourth address. Alternatively, the second access network device may send a downlink data packet to the terminal device. The downlink data packet may include a source identifier and a source address, for example, the second identifier and the second address. Alternatively, the downlink data packet may further include a destination identifier and a destination address, for example, the fourth identifier and the fourth address.

In this case, the terminal device needs to share information such as a packet space, a path identifier, a packet sequence number, and a congestion window on the second communication path with the first access network node device or the second access network node device. For example, the terminal device may send the information about the second communication path to the first access network device. The information about the second communication path may include, for example, a packet number space, a path identifier, a packet sequence number, and a congestion window that are associated with a data packet transmitted between the terminal device and the second access network device. Alternatively, for example, the terminal device may send the information about the second communication path to the second access network device. The information about the second communication path may include, for example, a packet number space, a path identifier, a packet sequence number, and a congestion window that are associated with a data packet transmitted between the terminal device and the second access network device. The terminal device may send AS signaling to the first access network device or the second access network device. The AS signaling may include the information about the second communication path. In an optional implementation, the first access network device and the second access network device further need to share a context of the first tunnel. For content of the context of the first tunnel, refer to the foregoing related descriptions. Details are not described herein again.

It should be understood that, due to a multipath feature, in the foregoing DC scenario, the first communication path between the terminal device and the first access network device or the second communication path between the terminal device and the second access network device may be used, to transmit data between the terminal device and different access network devices.

In another optional implementation, the data transmission solution in this embodiment of this application may be further applied to a handover scenario. In the handover scenario, the first access network device may be used as a source access network device, and a third access network device may be used as a target access network device. When the terminal device needs to be handed over from the first access network device to the third access network device, if the third access network device also supports the first transport layer network protocol, or supports multipath communication performed based on the first transport layer network protocol, the first access network device further needs to exchange information with the terminal device or the third access network device, to mutually know how to migrate the first tunnel based on the first transport layer network protocol.

A communication path based on the first transport layer network protocol between the terminal device and the third access network device may be understood as a third communication path of the first tunnel. To be specific, during tunnel migration in the handover scenario, the first communication path is migrated to the third communication path. If the terminal device, the first access network device, and the third access network device all support DAPS, in an implementation, the first access network device may first add the third communication path to the first tunnel, transmit same data on both the first communication path and the third communication path for a period of time, and then cancel the first communication path to implement tunnel migration. Specifically, for example, after data synchronization between the first communication path and the third communication path is achieved, the terminal device or the first access network device may delete a context of the first communication path, that is, the terminal device and the first access network device stop transmitting data on the first communication path. For specific implementation details of adding the third communication path, refer to related descriptions of adding the second communication path described in the foregoing embodiments. For implementation details of deleting the first communication path, refer to the following descriptions of deleting the first communication path during tunnel migration. Details are not described herein.

In another implementation based on DAPS, the first access network device may determine to use a tunnel migration manner, that is, the tunnel migration solution described in the following embodiment. If both the first access network device and the third access network device support the DC scenario described above, tunnel migration in the handover scenario and the DC scenario includes: migrating the first communication path to the third communication path, and migrating the second communication path to a fourth communication path. A fifth identifier and a fifth address of the first tunnel are associated with a fourth access network device, and the fourth access network device is a secondary node corresponding to the third access network device. An interaction process between the third access network device and the fourth access network device is similar to the foregoing interaction process between the first access network device and the second access network device. For details, refer to the foregoing related descriptions. Details are not described herein again. It may be understood that, in this embodiment of this application, if the terminal device, the first access network device, and the third access network device all support a DAPS function, the first access network device adds the third communication path to the first tunnel, and the third communication path is associated with the third access network device; or the first tunnel is migrated from the first communication path to the third communication path, and the third communication path is associated with the third access network device.

The first access network device may send Xn signaling to the third access network device, to indicate the third access network device to configure (or allocate or generate) a third identifier and/or a third address of the first tunnel. The first access network device may send the Xn signaling to the third access network device when determining that handover (handover) to the third access network device is needed. A trigger occasion of the Xn signaling is not limited in this embodiment of this application.

In an example, the first access network device may allocate the third identifier. The first access network device may include the third identifier in Xn signaling sent to the third access network device, to indicate the third access network device to configure the third address of the first tunnel for the first tunnel. Alternatively, it may be understood that the Xn signaling carrying the third identifier indicates the third access network device to configure the third address of the first tunnel for the terminal device, and the third identifier and the third address are associated with the third access network device. In an optional implementation, the Xn signalling from the first access network device further includes the fourth identifier and the fourth address of the terminal device. Alternatively, the first access network device may send the fourth identifier and the fourth address of the terminal device to the third access network device in a separate Xn signalling. An occasion on which the first access network device publishes the fourth identifier and the fourth address to the third access device is not limited in this embodiment of this application. For example, the Xn signaling may be implemented as a handover request from the first access network device.

Optionally, the third access network device may send the third address to the first access network device. Optionally, the third access network device may further carry the third identifier when sending the third address. Specifically, for example, the third access network device may send the third address in a response message to the Xn signaling sent by the first access network device, or send the third address and the third identifier in a response message to the Xn signaling sent by the first access network device. It should be noted that, in this embodiment of this application, whether the third access network device sends the third address or the third identifier to the first access network device is related to an initiator of a path migration process. A design at a communication system level may be used. For example, the first access network device initiates tunnel migration, the third access network device initiates tunnel migration, or the terminal device initiates tunnel migration. If the source access network device initiates the tunnel migration process, the target access network device needs to send the third address or send the third address and the third identifier to the source access network device. If the target access network device initiates tunnel migration, the target access network device does not need to additionally send the third address to the source access network device, or does not need to additionally send the third address and the third identifier to the source access network device, but may synchronize information about the third communication path to the source access network device when the target access network device initiates the process. The information about the third communication path may include the third identifier and/or the third address. In an optional implementation, a node that initiates tunnel migration may be dynamically specified in the communication system. In this case, for example, the source access network device may determine the node that initiates tunnel migration. If the source access network device chooses to autonomously initiate tunnel migration, a message sent to the target access network device may indicate, by default, that the target access network device needs to return the third identifier and/or the third address. If the source access network device chooses the target access network device to initiate tunnel migration, the source access network device may indicate, in a message sent to the target access network device, the target access network device to initiate subsequent tunnel migration. For example, the indication may be indicated by the fourth identifier and the fourth address of the terminal device, or there is independent indication information used to request the SN to initiate path addition. In this case, the target access network device does not return the third identifier and/or the third address to the source access network device, but autonomously initiates tunnel migration based on the received information. For implementation details of the tunnel migration process (that is, updating an identifier and an address of a data packet), refer to the following description. Details are not described herein.

In another example, the first access network device may send Xn signaling to the third access network device, to indicate the third access network device to configure the third identifier and the third address of the first tunnel. Alternatively, it may be understood that the Xn signaling indicates the third access network device to configure the third identifier and the third address of the first tunnel for the terminal device, and the third identifier and the third address are associated with the third access network device. Optionally, the Xn signalling from the first access network device may further include the fourth address and the fourth identifier of the terminal device. Alternatively, the first access network device may send the fourth identifier and the fourth address of the terminal device to the third access network device in a separate Xn signalling. An occasion on which the first access network device publishes the fourth identifier and the fourth address to the third access device is not limited in this embodiment of this application.

Optionally, the third access network device may send the third identifier and the third address to the first access network device. For example, the third access network device may send the third address and the third identifier in a response message to Xn signaling sent by the first access network device. Similarly, whether the third access network device sends the third address and the third identifier to the first access network device is related to an initiator of a path migration process. If the source access network device initiates the process, the target access network device needs to send the third address and the third identifier to the source access network device. If the target access network device initiates the process, the target access network device does not need to additionally send the third address and the third identifier to the source access network device, but may send the information about the third communication path to the source access network device when the target access network device initiates the process. The information about the third communication path may include the third identifier and the third address. For implementation details of the path migration process, refer to the following description. Details are not described herein.

In another example, the first access network device may send Xn signaling to the third access network device, to indicate the third access network device to configure the third identifier of the first tunnel. Alternatively, it may be understood that the Xn signaling indicates the third access network device to configure the third identifier of the first tunnel for the terminal device. Optionally, the Xn signalling from the first access network device may further include the fourth identifier and the fourth address of the terminal device. Alternatively, the first access network device may send the fourth identifier and the fourth address of the terminal device to the third access network device in a separate Xn signalling. An occasion on which the first access network device publishes the fourth identifier and the fourth address to the third access device is not limited in this embodiment of this application. It should be understood that, in this example, the target access network device may initiate the path migration process by default. For implementation details of the path migration process, refer to the following description. Details are not described herein.

In another example, the first access network device may send Xn signaling to the third access network device. The Xn signaling includes the fourth identifier and the fourth address of the terminal device. For example, the terminal device may include the fourth identifier and the fourth address of the terminal device in uplink AS signaling sent to the first access network device, and the first access network device may obtain the fourth identifier and the fourth address of the terminal device from the uplink AS signaling. Alternatively, the terminal device may include the fourth identifier and the fourth address in control information sent to the second access network device through the first tunnel, and the first access network device obtains the fourth identifier and the fourth address of the terminal device from the control information of the first tunnel. Alternatively, the terminal device may send an uplink data packet to the first access network device, where the uplink data packet may include the fourth identifier and the fourth address of the first tunnel, and the first access network device may obtain the fourth identifier and the fourth address from the uplink data packet. The fourth identifier and the fourth address are associated with the second communication path. It should be noted that the fourth address may also be associated with the first communication path, that is, it is understood that the first identifier and the fourth address are associated with the first communication path.

It should be understood that, in the foregoing description, the "indication" may also be equivalently understood as a "request". A meaning of the Xn signaling is not specifically limited in this embodiment of this application.

In this embodiment of this application, any one of the terminal device, the first access network device, or the third access network device may be used as an initiator to trigger a path migration process of the first tunnel.

The following describes examples of interaction processes involved for different initiators.

For example, the first access network device initiates the path migration process of the first tunnel. When deciding that the terminal device needs to be handed over (HO) to the third access network device, the first access network device may receive third information of the first tunnel from the third access network device. The third information may include the third identifier of the first tunnel, or may include the third address of the first tunnel, or may include the third identifier and the third address of the first tunnel. According to the solution described above, if the first access network device configures the third identifier for the third access network device, the third information from the third access network device may include the third address. If the third access network device configures the second identifier and the second address, the third information from the third access network device may include the third identifier and the third address.

When initiating the path migration process, the first access network device may send the third identifier or send the third identifier and the third address to the terminal device. Specifically, in an example, the first access network device may send a fourth access stratum message to the terminal device. The fourth access network message may include the third identifier, or the fourth access network message may include the third identifier and the third address. Specifically, the fourth access network message may be, for example, a handover command. In another example, the first access network device may send second control information to the terminal device through the first tunnel. Specifically, the first access network device may send the second control information to the terminal device through the first communication path of the first tunnel. The second control information may include the third identifier, or the second control information may include the third identifier and the third address. In another example, the first access network device may further send a downlink data packet to the terminal device, where the downlink data packet includes the third identifier and the third address of the first tunnel.

The first access network device may further send a context of the first tunnel to the third access network device. For example, using the QUIC protocol as an example, the context of the first tunnel may include the following content:
a QUIC configuration/attribute and a security context;
a number of a last packet received/sent on uplink/downlink by using the QUIC protocol;
a Stream/Connection stream control status: per stream offset of data consumed;
a buffer status, as shown in FIG. 13; and
a multipath status: a PID, a PN, and a packet number of a last packet that has been sent/received on each communication path.

It should be understood that the foregoing path migration process may be applicable to a handover procedure in which a connection exists between access network devices, or may be applicable to a procedure in which no connection exists between access network devices and handover needs to be performed through a core network. The first access network device may send the context of the first tunnel to the third access network device through a direct forwarding tunnel or an indirect forwarding tunnel between the first access network device and the third access network device.

Before the terminal device is handed over to the third access network device (for example, before the first access network device sends the handover command to the terminal device), a downlink data packet is sent to the terminal device. The downlink data packet includes the fourth identifier and the fourth address of the terminal device, and the third identifier and the third address.

After the terminal device is handed over to the third access network device (for example, after the terminal device accesses the third access network device), an uplink data packet may be sent to the third access network device. The uplink data packet may include the fourth identifier and the fourth address of the terminal device, and the third identifier and the third address, indicating that the terminal device accepts path migration.

It should be understood that the foregoing example is merely an example description of an interaction process that may be involved in a process in which the first access network device initiates path migration of the first tunnel, rather than any limitation.

For example, the third access network device initiates the path migration process of the first tunnel. The third access network device may obtain, in a process of interacting with the terminal device and the first access network device, information associated with the terminal device, for example, the fourth identifier and the fourth address of the terminal device, and initiate the path migration process of the first tunnel.

For example, the first access network device may send fifth indication information to the third access network device. The fifth indication information may indicate the fourth identifier of the first tunnel, or the fifth indication information may indicate the fourth identifier and the fourth address of the first tunnel. The fifth indication information may be carried in Xn signaling from the first access network device. For example, the fifth indication information may be carried in a handover request sent by the first access network device.

Optionally, before initiating path migration, the third access network device may send the third identifier to the terminal device through the first access network device, or send the third identifier and the third address to the terminal device through the first access network device. The first access network device may send the third identifier to the terminal device, or the first access network device may send the third identifier and the third address to the terminal device. In an optional implementation, the first access network device may send a fourth access stratum message to the terminal device, where the fourth access stratum message includes the third identifier, or the fourth access stratum message includes the third identifier and the third address. Specifically, the fourth access stratum message may be a handover command. In another optional implementation, the first access network device may send second control information to the terminal device through the first tunnel, where the second control information includes the third identifier, or the second control information includes the third identifier and the third address. In another optional implementation, the first access network device may send a downlink data packet to the terminal device, where the downlink data packet may include the third identifier and the third address. For example, the third access network device may include the third identifier in a handover request response message sent to the first access network device, or include the third identifier and the third address in a handover request response message sent to the first access network device. The first access network device may include the third identifier or the third identifier and the third address in the handover command sent to the terminal device.

The first access network device may further send a context of the first tunnel to the third access network device. For the context of the first tunnel, refer to the foregoing description. Details are not described herein again.

After the terminal device is handed over to the third access network device, the third access network device may send a downlink data packet to the terminal device. The downlink data packet includes the fourth identifier and the fourth address of the terminal device, and the third identifier and the third address. The terminal device may further send an uplink data packet to the third access network device. The uplink data packet may include the fourth identifier and the fourth address of the terminal device, and the third identifier and the third address, indicating that the terminal device accepts path migration.

For example, the terminal device initiates path migration of the first tunnel. The terminal device may receive the third identifier and/or the third address of the third access network device through the first access network device. The terminal device may obtain the third identifier and the third address in a handover command from the first access network device. Alternatively, the terminal device may obtain the third identifier in AS signaling from the first access network device, or obtain the third identifier and the third address in the AS signaling. Specifically, the AS signaling may be a handover command or new AS signaling. Alternatively, the terminal device may receive control information from the first access network device through the first tunnel. The control information may include the third identifier, or the control information may include the third identifier and the third address. A manner in which the terminal device obtains the third identifier and/or the third address is not limited in this embodiment of this application.

The first access network device may further send a context of the first tunnel to the third access network device. For the context of the first tunnel, refer to the foregoing description. Details are not described herein again.

After being handed over to the third access network device, the terminal device may send an uplink data packet to the third access network device. The uplink data packet may include the fourth identifier and the fourth address of the terminal device, and the third identifier and the third address, indicating that the terminal device accepts path migration.

It should be understood that the foregoing processes are merely examples of information exchange involved in the processes in which different initiators initiate path migration, rather than any limitation. In another embodiment, there may be another interaction process between the first access network device, the third access network device, and the terminal device. Details are not described herein.

In an optional implementation, if the terminal device supports only single-path communication with an access network device, the terminal device may freeze uplink and downlink transmission based on the first tunnel after receiving a handover command. After being handed over to the third access network device, the terminal device may restore the context of the first tunnel, and restart uplink and downlink transmission based on the first tunnel, to perform data transmission with the third access network device based on the first tunnel, the third identifier, and the third address.

In another optional implementation, if the terminal device, the first access network device, and the third access network device all support DAPS, 0-interruption tunnel migration may be further supported. The first access network device may further indicate, to the terminal device, a data transmission rule on the first communication path (or referred to as a source path, an old path, or the like) and the third communication path (or referred to as a target path, a new path, or the like) of the first tunnel. The data transmission rule may include, for example, any one of the following transmission modes:
(1) Duplication mode: To be specific, same data is transmitted on both the first communication path and the third communication path.
(2) Mode in which transmission on a new path is preferential: The new path is the third communication path between the terminal device and the third access network device, and the first communication path between the terminal device and the first access network device is an old path. In the mode in which transmission on the new path is preferential, uplink data is preferentially sent on the new path, and when uplink transmission cannot be performed on the new path, the uplink data is sent on the old path.
(3) Proportion-based transmission mode: Proportions for data transmission performed on the first communication path and the third communication path may be set, and the terminal device may separately perform data transmission on the first communication path and the third communication path based on the set proportions.
(4) Transmission quality-based transmission mode: Transmission quality for data transmission performed on the first communication path and the third communication path may be set, and the terminal device may separately perform data transmission on the first communication path and the third communication path based on the set transmission quality.

Correspondingly, the terminal device may implement data transmission with the first access network device and/or the third access network device in a corresponding transmission mode according to the received data transmission rule.

Any one of the terminal device, the first access network device, or the third access network device may determine whether the source path needs to be deleted, and may indicate another device to delete a context related to the source path, or notify another device after the device has deleted a context related to the source path.

For example, the third access network device may determine whether the source path needs to be deleted. For example, if the duplication mode is used, the third access network device may determine, when determining that the uplink data sent through the source path and the target path has synchronously arrived, that the source path needs to be deleted. Alternatively, for example, when the third access network device does not receive context information from the first access network device within specified time, the third access network device determines that the source path needs to be deleted. Alternatively, for example, when receiving an end marker (end marker) from the first access network device, the third access network device determines that the source path needs to be deleted. When it is determined that the source path needs to be deleted, in an implementation, the third access network device may send indication information to the terminal device, and the indication information indicates the terminal device to delete the first communication path to the first access network device. Specifically, the third access network device may indicate the terminal device to delete a context of the first communication path. In another implementation, the third access network device may send indication information to the first access network device, and the indication information indicates the first access network device to delete the first communication path to the terminal device. Specifically, the third access network device may indicate the first access network device to delete the context of the first tunnel.

Alternatively, for example, the first access network device may determine whether the source path needs to be deleted. For example, when no data needs to be transmitted on the source path, the first access network device may determine that the source path needs to be deleted. When it is determined that the source path needs to be deleted, the first access network device sends indication information to the terminal device, and the indication information indicates the terminal device to delete the first communication path to the first access network device. In addition, the first access network device deletes a context of the first communication path, and sends indication information to the third access network device, and the indication information indicates that the context related to the source path has been deleted.

Alternatively, for example, the terminal device may determine whether the source path needs to be deleted. For example, when determining that the first communication path is no longer needed, the terminal device sends indication information to the third access network device, and the indication information indicates the third access network device to delete a context of the first communication path. The third access network device may further send a notification message to the first access network device, to notify that the first communication path has been deleted. Alternatively, when determining that the first communication path is no longer needed, the terminal device sends indication information to the first access network device, and the indication information indicates the first access network device to delete a context of the first communication path. The first access network device may further send a notification message to the third access network device, to notify that the first communication path has been deleted.

For ease of understanding, the following describes implementation details of the data transmission method in embodiments of this application with reference to different embodiments.

### Embodiment 1

In Embodiment 1, in a process of establishing a session between a terminal device and a core network, an SMF network element may request a first access network device to configure a first address of a first tunnel for the terminal device, and the SMF network element may send first information to the terminal device through the first access network device, to notify the terminal device of the first address of the first tunnel, so that the first tunnel using a first transport layer network protocol is introduced between the terminal device and the first access network device, to ensure quality of communication between the terminal device and the first access network device.

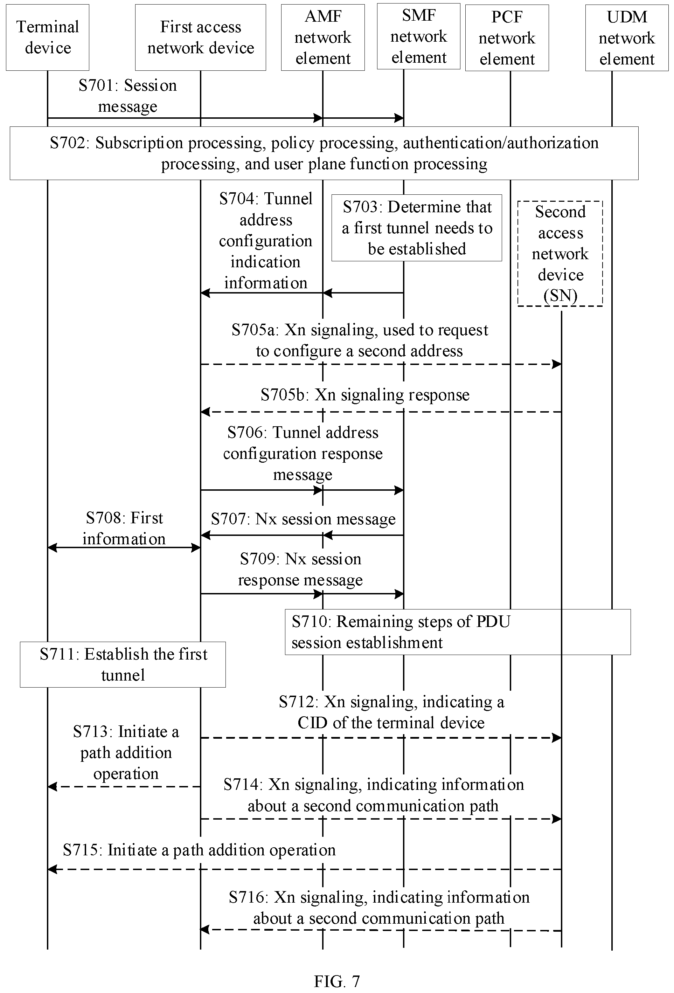

As shown in FIG. 7, the data transmission method may include the following steps.

S701: The terminal device sends a session message to the SMF network element through an AMF network element. The session message may be a session establishment message, and indicate to establish a session for the terminal device, for example, establish a PDU session. Alternatively, the session message may be a session modification message, for example, a PDU session modification message. This is not limited in this embodiment of this application.

Correspondingly, the AMF network element may receive the session message, and forward the session message to the SMF network element. The "forwarding" herein may also be understood as "transparent transmission". To be specific, the AMF network element performs only format conversion on the session message, but does not parse the message. For related explanations, refer to the foregoing related descriptions. Details are not described herein again.

In this embodiment of this application, the session message may be represented as a first non-access stratum message. The session message may include first indication information. The first indication information may indicate that the terminal device supports the first transport layer network protocol, or the first indication information indicates that the terminal device supports multipath communication performed based on the first transport layer network protocol. The terminal device may send the session message to the AMF network element through an N1 interface. The AMF network element sends the session message to the SMF network element through an N11 interface. Correspondingly, the SMF network element may receive the session message from the AMF network element, and obtain the first indication information from the session message. The SMF network element may determine, based on the first indication information, whether establishment of the first tunnel using the first transport layer network protocol is supported between the terminal device and the first access network device, or determine, based on the first indication information, whether multipath communication based on the first transport layer network protocol is supported between the terminal device and the first access network device.

In an optional implementation, the session message may be represented as a second non-access stratum message, the session message may include second indication information, and the second indication information indicates to establish the first tunnel between the terminal device and the first access network device. The second indication information may be an explicit indication or an implicit indication. For example, the second indication information is service requirement description information. When the service requirement description information provides a description that a service on the terminal device side needs a stable latency, it may be considered as an indication that the first tunnel needs to be established between the terminal device and the first access network device.

It should be understood that, in this embodiment of this application, the first indication information and the second indication information may be carried in a same message, or may be carried in different messages. This is not limited in this embodiment of this application.

S702: The terminal device, the first access network device, and a plurality of network elements (for example, including the AMF network element, the SMF network element, a PCF network element, and a UDM network element) of the core network perform subscription processing, policy processing, authentication/authorization processing, user plane function processing, and the like. For specific implementation details, refer to a related standard document of 3GPP. Details are not described herein.

S703: The SMF network element determines that the first tunnel needs to be established between the terminal device and the first access network device.

In this embodiment of this application, the SMF network element may determine, based on content in the session message received from the terminal device in S701, that the first tunnel needs to be established between the terminal device and the first access network device. For example, when the session message carries the second indication information, the SMF network element may determine, based on the second indication information, that the first tunnel needs to be established between the terminal device and the first access network device. Alternatively, for example, when the session message carries the first indication information, the SMF network element may further obtain tunnel capability information of the first access network device. If both the terminal device and the first access network device can support the first transport layer network protocol, or support multipath communication performed based on the first transport layer network protocol, the SMF network element may determine that the first tunnel needs to be established between the terminal device and the first access network device.

Alternatively, in an implementation process of S702, the SMF network element may determine, by interacting with the terminal device, the first access network device, or another core network element, that the first tunnel needs to be established between the terminal device and the first access network device. For example, in the implementation process of S702, the SMF network element may further receive other request information, for example, DNN information or slice information, from the terminal device, and the SMF network element may determine, with reference to the DNN information or the slice information, that the first tunnel needs to be established between the terminal device and the first access network device. Alternatively, for example, in the implementation process of S702, the SMF network element may further receive policy information from the PCF network element or subscription information from the UDM network element, and determine, based on the received policy information or subscription information, that the first tunnel needs to be established between the terminal device and the first access network device.

S704: The SMF network element sends tunnel address configuration indication information to the first access network device, where the tunnel address configuration indication information is used to request the first access network device to configure the first address of the first tunnel, or it is understood that the tunnel address configuration indication information indicates the first access network device to configure the first address of the first tunnel for the terminal device.

In an optional implementation, the tunnel address configuration indication information from the SMF network element may be represented as second indication information, and the second indication information indicates to establish the first tunnel between the terminal device and the first access network device. The second indication information may be carried in a control message from the SMF network element. The control message may be a newly added control plane message. The SMF network element may send the control message to the AMF network element through the N11 interface, and the AMF network element may send the control message to the first access network device through an N2 interface. It may be understood that a message carrying the second indication information may be the control message from the SMF network element.

In an optional implementation, the tunnel address configuration indication information from the SMF network element may be represented as fourth indication information, and the fourth indication information indicates to configure the first address of the first tunnel. The first access network device may determine, based on the fourth indication information and an agreement in the first transport layer network protocol, that a default mode is attribute information of the first tunnel. The attribute information may include, for example, any one of the following transmission modes: a data packet mode, a stream mode, or a security mode. In another optional implementation, the tunnel address configuration indication information from the SMF network element may further indicate attribute information of the first tunnel. The first access network device may obtain the attribute information of the first tunnel from the tunnel address configuration indication information. The attribute information may include, for example, any one of the following transmission modes: a data packet mode, a stream mode, or a security mode.

In an optional implementation, the tunnel address configuration indication information may further include an IP address of the terminal device, and the IP address of the terminal device may be used by the first access network device to actively initiate a procedure of establishing the first tunnel to the terminal device.

In another optional implementation, in a DC scenario, a communication system may further include a second access network device (SN). The first access network device is a master node of the terminal device, and the second access network device is a secondary node of the terminal device. The first access network device and the second access network device may further perform the following S705a and/or S705b in collaboration, to configure a second identifier and a second address of the first tunnel for the terminal device, so as to extend a multipath feature of the first tunnel in the DC scenario.

S705a (optional step): The first access network device sends Xn signaling to the second access network device through an Xn interface, where the Xn signaling is used to request to add or modify an SN, and request the SN to configure the second address of the first tunnel for the terminal device, or request the SN to configure the second identifier and the second address of the first tunnel for the terminal device. Correspondingly, the second access network device may configure the second address of the first tunnel for the terminal device or configure the second identifier and the second address of the first tunnel for the terminal device based on the received Xn signaling. There may be one or more second identifiers. The second address may include an IP address and a port number that are provided by the second access network device for the first tunnel.

S705b (optional step): The second access network device sends an Xn signaling response to the first access network device through the Xn interface. The Xn signaling response may include the second address. Alternatively, the Xn signaling response may include the second identifier and the second address. Correspondingly, the first access network device receives and stores the second identifier and the second address of the first tunnel. It should be understood that S705a and S705b are optional steps. In an implementation, only S705a may be implemented. In another implementation, both S705a and S705b may be implemented. For implementation details, refer to the foregoing descriptions. Details are not described herein again.

S706: The first access network device sends a response message for the tunnel address configuration indication information to the SMF network element through the AMF network element. Correspondingly, the SMF network element receives the response message from the first access network device.

The response message may include a first identifier and the first address of the first tunnel. In an optional DC scenario, the response message may include the first identifier, the first address, the second identifier, and the second address of the first tunnel.

The first access network device sends the response message to the AMF network element through the N2 interface, and the AMF network element sends the response message to the SMF network element through the N11 interface. The SMF network element may receive the response message from the AMF network element, and obtain the first identifier and the first address of the first tunnel from the response message. In an optional DC scenario, the first identifier, the first address, the second identifier, and the second address of the first tunnel are obtained.

S707: The SMF network element sends an Nx session message to the first access network device through the AMF network element. Correspondingly, the first access network device receives the Nx session message from the SMF network element.

In this embodiment of this application, the SMF network element may send a session message to the AMF network element through the N11 interface. The session message carries an information element sent to the terminal device, and the information element sent to the terminal device includes the first address of the first tunnel that is reported by the first access network device. In an optional implementation, the information element sent to the terminal device includes the attribute information of the first tunnel that is reported by the first access network device. In an optional DC scenario, the information element sent to the terminal device may include the first address and the second address of the first tunnel that are reported by the first access network device.

The AMF network element sends a session message to the first access network device through the N2 interface. The session message carries an information element sent to the terminal device, and the information element sent to the terminal device includes the first address of the first tunnel that is reported by the first access network device. In an optional implementation, the information element sent to the terminal device includes the attribute information of the first tunnel that is reported by the first access network device. In an optional DC scenario, the information element sent to the terminal device may include the first address and the second address of the first tunnel that are reported by the first access network device.

S708: The first access network device sends the first information to the terminal device. Correspondingly, the terminal device feeds back response information for the first information to the first access network device.

In this embodiment of this application, the first information is carried in a downlink RRC message from the first access network device, and the first information may indicate the first address of the first tunnel. The response information for the first information may be carried in an uplink RRC message from the terminal device, and the response information for the first information may indicate that the first address of the first tunnel is received.

In an optional implementation, when S708 is implemented, the first access network device may further send the attribute information of the first tunnel to the terminal device. The first information may include the attribute information of the first tunnel. Alternatively, the first information and the attribute information of the first tunnel may be carried in a same downlink RRC message, or may be carried in different downlink RRC messages.

In an optional DC scenario, the first information may indicate the first address and the second address of the first tunnel, second information may indicate the attribute information and a second attribute of the first tunnel, and the second attribute is associated with a second communication path between the terminal device and the second access network device.

The RRC message transmitted between the first access network device and the terminal device may be a newly added access stratum message, or may reuse an existing access stratum message between the first access network device and the terminal device. The first information or the second information may be carried in a reserved field of the existing access stratum message, or may be a replacement for another information element in the existing access stratum message. This is not limited in this embodiment of this application.

S709: The first access network device feeds back an Nx session response message to the SMF network element through the AMF network element. Correspondingly, the SMF network element receives the Nx session response message from the first access network device.

S710: The SMF network element and another core network element perform remaining steps of PDU session establishment. For specific implementation details, refer to a related standard document of 3GPP. Details are not described herein.

S711: Establish the first tunnel using the first transport layer network protocol between the terminal device and the first access network device.

In an implementation, the terminal device may initiate S711 based on received information. In an optional DC scenario, the first access network device may further send the second identifier of the first tunnel to the terminal device, or send the second identifier and the second address of the first tunnel to the terminal device.

In another implementation, the first access network device may initiate S711 based on received information.

For specific implementation details of S711, refer to a connection establishment process in the first transport layer network protocol, for example, a connection establishment process in a QUIC protocol. Details are not described herein.

Then, the terminal device may perform data transmission with the first access network device based on the first tunnel.

In an optional DC scenario, the second communication path further needs to be added to the first tunnel, so that the terminal device can implement data transmission with the second access network device based on the second communication path. In this case, the first access network device may further perform the following optional step.

S712 (optional step): The first access network device sends Xn signaling to the second access network device through the Xn interface, to indicate a CID of the terminal device. For example, the first access network device sends sixth indication information to the second access network device through the Xn interface. The sixth indication information may indicate a fourth identifier of the first tunnel, or the sixth indication information may indicate a fourth identifier and a fourth address of the first tunnel. The fourth identifier and the fourth address are associated with the terminal device, and may be obtained by the first access network device in S711, or may be obtained in another previous interaction process. This is not limited in this embodiment of this application. That is, an execution occasion of S712 is not limited.

The terminal device, the first access network device, and the second access network device further need to interact with each other, to add the second communication path to the first tunnel. A procedure of adding the second communication path may be initiated by the first access network device, or may be initiated by the second access network device, or may be initiated by the terminal device.

For example, if the first access network device initiates, to the terminal device, the procedure of adding the second communication path, after S711, the method may further include the following optional steps.

S713 (optional step): The first access network device initiates a path addition operation to the terminal device based on an address of the SN and the CID. For example, the first access network device initiates the path addition operation to the terminal device based on the second identifier and the second address of the first tunnel.

In an example, S713 may be implemented by using AS signaling. For example, the first access network device may send a third access stratum message to the terminal device, and the third access stratum message includes the second identifier, or the third access stratum message includes the second identifier and the second address.

In another example, S713 may be implemented through the first tunnel. For example, the first access network device may send first control information to the terminal device through the first tunnel, and the first control information may include the second identifier, or the first control information may include the second identifier and the second address. Specifically, the first access network may send the first control information to the terminal device through a first communication path of the first tunnel.

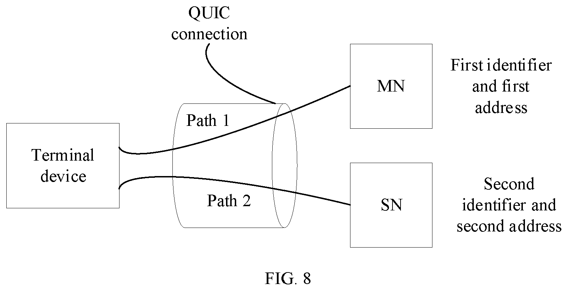

Herein, a difference from a multipath feature of a common QUIC protocol is as follows: Two endpoints of the multipath feature of the common QUIC protocol are a same entity (or node), and the multipath feature is caused by an address change of the terminal device (for example, an IP address change of the UE due to handover in 3GPP and Wi-Fi technologies). The case herein is caused by data transmission between the terminal device and different access network devices. As shown in FIG. 8, the terminal device may separately perform data transmission with different access network devices through different paths of a same QUIC tunnel, for example, perform data transmission with the first access network device through a first communication path (for example, represented as a path 1), a first identifier, and a first address of the same QUIC tunnel, and perform data transmission with the second access network device through a second communication path (for example, represented as a path 2), a second identifier, and a second address.

S714 (optional step): The first access network device sends Xn signaling to the second access network device through the Xn interface, to indicate information about the second communication path. For example, the Xn signaling includes the information about the second communication path, for example, the second identifier, a packet number space, and a packet sequence number.

For example, if the second access network device initiates, to the terminal device, the procedure of adding the second communication path, after S711, the method may further include the following optional steps.

S715 (optional step): The second access network device initiates a path addition operation to the terminal device.

S715 may be implemented through the first tunnel. For example, the second access network device may send third control information to the terminal device through the first tunnel, and the third control information may include the second identifier, or the third control information may include the second identifier and the second address. Optionally, the third control information further includes the fourth identifier and the fourth address of the first tunnel, a source path identifier of the third control information is the first identifier or the second identifier, and a target path identifier of the third control information is the fourth identifier.

S716 (optional step): The second access network device synchronizes information about the second communication path to the first access network device. For example, the second access network device sends Xn signaling to the first access network device through the Xn interface, to indicate the information about the second communication path. For example, the Xn signaling includes the information about the second communication path, for example, the second identifier, a packet number space, and a packet sequence number.

Based on Embodiment 1, interaction between the terminal device and the first access network device and some core network elements may be designed, to introduce a tunnel using the QUIC protocol between the terminal device and the first access network device, so as to ensure quality of communication between the terminal device and the first access network device. In addition, in an optional DC scenario, interaction between the second access network device and the first access network device or the terminal device is further designed, to introduce different QUIC communication paths between the terminal device and the second access network device, so as to ensure quality of communication between the terminal device and the second access network device.

### Embodiment 2

In Embodiment 2, in a process of establishing a session between a terminal device and a core network, an SMF network element indicates a first access network device to configure a first address of a first tunnel for the terminal device, and notifies the terminal device, so that the first tunnel using a first transport layer network protocol is introduced between the terminal device and the first access network device, to ensure quality of communication between the terminal device and the first access network device.

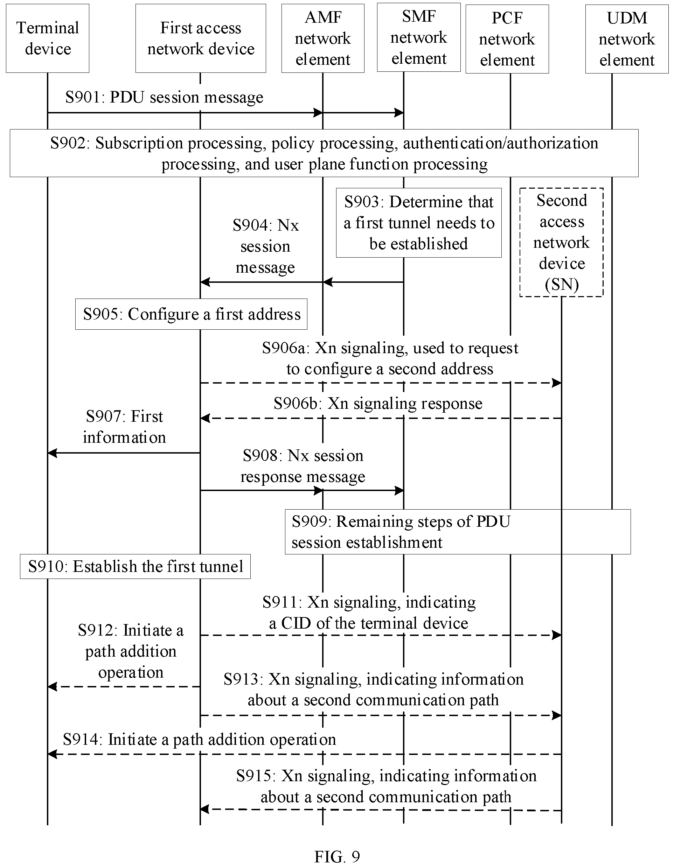

As shown in FIG. 9, the data transmission method may include the following steps.

S901: The terminal device sends a session message to the SMF network element through an AMF network element. The session message indicates to establish a session for the terminal device, for example, establish a PDU session. Correspondingly, the AMF network element may receive the session message, and forward the session message to the SMF network element. For specific implementation details, refer to the foregoing descriptions with reference to S701. Details are not described herein again.

S902: The terminal device, the first access network device, and a plurality of network elements (for example, including the AMF network element, the SMF network element, a PCF network element, and a UDM network element) of the core network perform subscription processing, policy processing, authentication/authorization processing, user plane function processing, and the like. For specific implementation details, refer to the foregoing descriptions with reference to S702. Details are not described herein again.

S903: The SMF network element determines that the first tunnel needs to be established between the terminal device and the first access network device. For specific implementation details, refer to the foregoing descriptions with reference to S703. Details are not described herein again.

S904: The SMF network element sends an Nx session message to the first access network device through the AMF network element. Correspondingly, the first access network device receives the Nx session message from the SMF network element.

In this embodiment of this application, the SMF network element may send an N11 session message to the AMF network element through an N11 interface, and the N11 session message may carry tunnel address configuration indication information. The AMF network element sends an N2 session message to the first access network device through an N2 interface, and the N2 session message may carry the tunnel address configuration indication information. The tunnel address configuration indication information is used to request the first access network device to configure the first address of the first tunnel, or it is understood that the tunnel address configuration indication information indicates the first access network device to configure the first address of the first tunnel for the terminal device.

In an optional implementation, the tunnel address configuration indication information from the SMF network element may be represented as second indication information, and the second indication information indicates to establish the first tunnel between the terminal device and the first access network device. The second indication information may be carried in a fourth non-access stratum message from the SMF network element. The fourth non-access stratum message may be a newly added control plane message. The SMF network element may send the fourth non-access stratum message to the AMF network element through the N11 interface, and the AMF network element may send the fourth non-access stratum message to the first access network device through the N2 interface.

S905: The first access network device configures the first address of the first tunnel for the terminal device based on related indication information from the SMF network element.

In an optional implementation, the tunnel address configuration indication information from the SMF network element may be represented as fourth indication information, and the fourth indication information indicates to configure the first address of the first tunnel. The first access network device may further determine, based on the fourth indication information and an agreement in the first transport layer network protocol, that a default mode is attribute information of the first tunnel. The attribute information may include, for example, any one of the following transmission modes: a data packet mode, a stream mode, or a security mode.

In another optional implementation, the tunnel address configuration indication information from the SMF network element may include attribute information of the first tunnel. During implementation of S905, the first access network device may further obtain the attribute information of the first tunnel from the tunnel address configuration indication information. The attribute information may include, for example, any one of the following transmission modes: a data packet mode, a stream mode, or a security mode.

In a DC scenario, a communication system may further include a second access network device (SN). The first access network device is a master node of the terminal device, and the second access network device is a secondary node of the terminal device. The first access network device and the second access network device may further perform the following S906a and S906b in collaboration, to configure a second identifier and a second address of the first tunnel for the terminal device, so as to extend a multipath feature of the first tunnel in the DC scenario. For specific implementation details of S906a, refer to the foregoing descriptions with reference to S705a. For specific implementation details of S906b, refer to the foregoing descriptions with reference to S705b. Details are not described herein again.

S906a (optional step): The first access network device sends Xn signaling to the second access network device through an Xn interface, where the Xn signaling is used to request to add or modify an SN, and request the SN to configure the second address of the first tunnel for the terminal device, or request the SN to configure the second identifier and the second address of the first tunnel for the terminal device. Correspondingly, the second access network device may configure the second address of the first tunnel for the terminal device or configure the second identifier and the second address of the first tunnel for the terminal device based on the received Xn signaling. There may be one or more second identifiers. The second address may include an IP address and a port number that are provided by the second access network device for the first tunnel.

S906b (optional step): The second access network device sends an Xn signaling response to the first access network device through the Xn interface. The Xn signaling response may include the second address. Alternatively, the Xn signaling response may include the second identifier and the second address. Correspondingly, the first access network device receives and stores the second identifier and the second address of the first tunnel. It should be understood that S906a and S906b are optional steps. In an implementation, only S906a may be implemented. In another implementation, both S906a and S906b may be implemented. For implementation details, refer to the foregoing descriptions. Details are not described herein again.

S907: The first access network device sends first information to the terminal device. Correspondingly, the terminal device feeds back response information for the first information to the first access network device. For specific implementation details, refer to the foregoing descriptions with reference to S708. Details are not described herein again.

S908: The first access network device feeds back an Nx session response message to the SMF network element through the AMF network element. Correspondingly, the SMF network element receives the Nx session response message from the first access network device.

S909: The SMF network element and another core network element perform remaining steps of PDU session establishment. For specific implementation details, refer to a related standard document of 3GPP. Details are not described herein.

S910: Establish the first tunnel using the first transport layer network protocol between the terminal device and the first access network device.

In an implementation, the terminal device may initiate S910 based on received information. In an optional DC scenario, the first access network device may further send the second identifier of the first tunnel to the terminal device.

In another implementation, the first access network device may initiate S910 based on received information.

For specific implementation details of S910, refer to a connection establishment process in the first transport layer network protocol, for example, a connection establishment process in a QUIC protocol. Details are not described herein.

Then, the terminal device may perform data transmission with the first access network device based on the first tunnel. In an optional DC scenario, the terminal device may separately perform data transmission with the first access network device or the second access network device based on a plurality of communication paths of the first tunnel. For example, a first identifier and the first address of the first tunnel are associated with a first communication path of the first tunnel, the terminal device performs data transmission with the first access network device through the first communication path, the second identifier and the second address of the first tunnel are associated with a second communication path of the first tunnel, and the terminal device performs data transmission with the second access network device through the second communication path.

In an optional DC scenario, the first access network device may further perform the following optional step.

S911 (optional step): The first access network device sends Xn signaling to the second access network device through the Xn interface, to indicate a CID of the terminal device. For example, the first access network device sends sixth indication information to the second access network device through the Xn interface. The sixth indication information may indicate a fourth identifier of the first tunnel, or the sixth indication information may indicate a fourth identifier and a fourth address of the first tunnel. The fourth identifier and the fourth address are associated with the terminal device, and may be obtained by the first access network device in S910.

The terminal device, the first access network device, and the second access network device further need to interact with each other, to add the second communication path to the first tunnel. A procedure of adding the second communication path may be initiated by the first access network device, or may be initiated by the second access network device, or may be initiated by the terminal device.

If the first access network device initiates, to the terminal device, the procedure of adding the second communication path, after S711, the method may further include the following optional steps.

S912 (optional step): The first access network device initiates a path addition operation to the terminal device based on an address of the SN and the CID. For example, the first access network device initiates the path addition operation to the terminal device based on the second identifier and the second address of the first tunnel.

In an example, S912 may be implemented by using AS signaling. For example, the first access network device may send a third access stratum message to the terminal device, and the third access stratum message includes the second identifier, or the third access stratum message includes the second identifier and the second address.

In another example, S912 may be implemented through the first tunnel. For example, the first access network device may send first control information to the terminal device through the first tunnel, and the first control information may include the second identifier, or the first control information may include the second identifier and the second address.

Herein, a difference from a multipath feature of a common QUIC protocol is as follows: Two endpoints of the multipath feature of the common QUIC protocol are a same entity (or node), and the multipath feature is caused by an address change of the UE (for example, an IP address change of the UE due to handover in 3GPP and Wi-Fi technologies). The case herein is caused by data transmission between the terminal device and different access network devices. As shown in FIG. 8, the UE separately performs data transmission with different access network devices through different paths of a same QUIC tunnel, for example, perform data transmission with the first access network device through a first communication path (for example, represented as a path 1), a first identifier, and a first address of the same QUIC tunnel, and perform data transmission with the second access network device through a second communication path (for example, represented as a path 2), a second identifier, and a second address.

S913 (optional step): The first access network device sends Xn signaling to the second access network device through the Xn interface, to indicate information about the second communication path. For example, the Xn signaling includes the information about the second communication path, for example, the second identifier, a packet number space, and a packet sequence number.

If the second access network device initiates, to the terminal device, the procedure of adding the second communication path, after S910, the method may further include the following optional steps.

S914 (optional step): The second access network device (SN) initiates a path addition operation to the terminal device.

S914 may be implemented through the first tunnel. For example, the second access network device may send third control information to the terminal device through the first tunnel, and the third control information may include the second identifier, or the third control information may include the second identifier and the second address. Optionally, the third control information further includes the fourth identifier and the fourth address of the first tunnel, a source path identifier of the third control information is the first identifier or the second identifier, and a target path identifier of the third control information is the fourth identifier.

S915 (optional step): The second access network device synchronizes information about the second communication path to the first access network device. For example, the second access network device sends Xn signaling to the first access network device through the Xn interface. The Xn signaling includes the information about the second communication path, for example, the second identifier, a packet number space, and a packet sequence number.

Based on Embodiment 1, interaction between the terminal device and the first access network device and some core network elements may be designed, to introduce a tunnel using the QUIC protocol between the terminal device and the first access network device, so as to ensure quality of communication between the terminal device and the first access network device. In addition, in an optional DC scenario, interaction between the second access network device and the first access network device or the terminal device is further designed, to introduce different QUIC communication paths between the terminal device and the second access network device, so as to ensure quality of communication between the terminal device and the second access network device.

### Embodiment 3

In Embodiment 3, if a terminal device determines, based on a received indication, that a first tunnel needs to be established with a first access network device, after a PDU session is established between the terminal device and a core network, the terminal device may request the first access network device to configure a first address of the first tunnel, to introduce the first tunnel using a first transport layer network protocol between the terminal device and the first access network device, so as to ensure quality of communication between the terminal device and the first access network device.

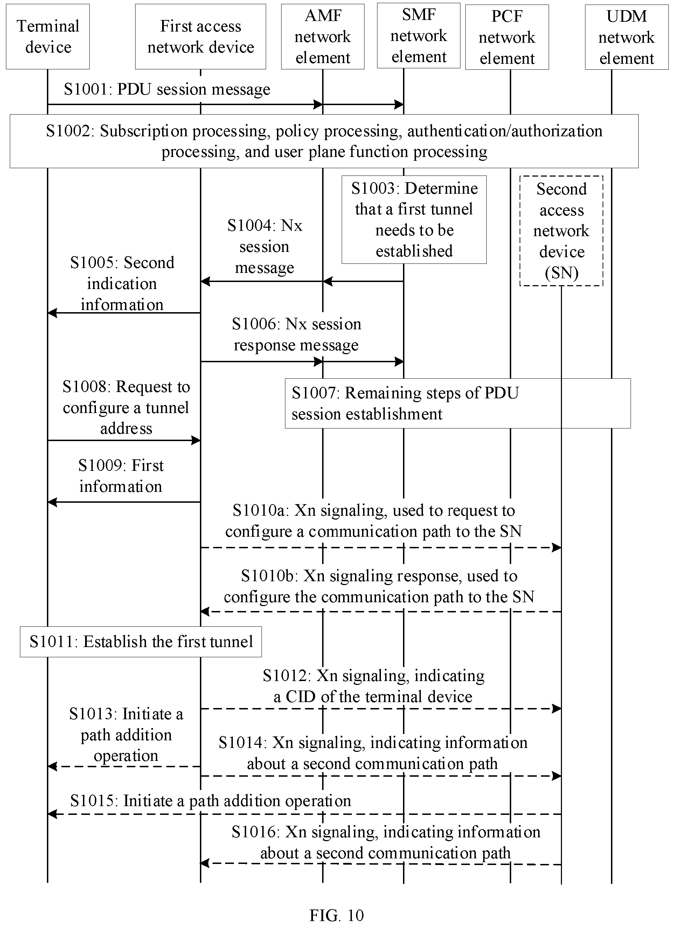

As shown in FIG. 10, the data transmission method may include the following steps.

S1001: The terminal device sends a session message to an SMF network element through an AMF network element. The session message indicates to establish a session for the terminal device, for example, establish a PDU session. Correspondingly, the AMF network element may receive the session message, and forward the session message to the SMF network element. For specific implementation details, refer to the foregoing descriptions with reference to S701. Details are not described herein again.

S1002: The terminal device, the first access network device, and a plurality of network elements (for example, including the AMF network element, the SMF network element, a PCF network element, and a UDM network element) of the core network perform subscription processing, policy processing, authentication/authorization processing, user plane function processing, and the like. For specific implementation details, refer to the foregoing descriptions with reference to S702. Details are not described herein again.

S1003: The SMF network element determines that the first tunnel needs to be established between the terminal device and the first access network device. For specific implementation details, refer to the foregoing descriptions with reference to S703. Details are not described herein again.

S1004: The SMF network element sends an Nx session message to the first access network device through the AMF network element. Correspondingly, the first access network device receives the Nx session message from the SMF network element.

In this embodiment of this application, the SMF network element may send an N11 session message to the AMF network element through an N11 interface, and the N11 session message may carry tunnel indication information. The AMF network element sends an N2 session message to the first access network device through an N2 interface, and the N2 session message may carry the tunnel indication information. The tunnel indication information indicates that the terminal device needs to establish the first tunnel with the first access network device.

In an optional implementation, the tunnel indication information from the SMF network element may include attribute information of the first tunnel. The attribute information may include, for example, any one of the following transmission modes: a data packet mode, a stream mode, or a security mode.

S1005: The first access network device sends the tunnel indication information to the terminal device, where the tunnel indication information is represented as second indication information. Correspondingly, the terminal device receives the second indication information from the first access network device.

The tunnel indication information indicates that the terminal device needs to establish the first tunnel with the first access network device. In an optional implementation, the tunnel indication information from the first access network device may include the attribute information of the first tunnel. The attribute information may include, for example, any one of the following transmission modes: a data packet mode, a stream mode, or a security mode.

S1006: The first access network device feeds back an Nx session response message to the SMF network element through the AMF network element. Correspondingly, the SMF network element receives the Nx session response message from the first access network device.

S1007: The SMF network element and another core network element perform remaining steps of PDU session establishment. For specific implementation details, refer to a related standard document of 3GPP. Details are not described herein.

S1008: The terminal device sends second indication information to the first access network device, where the second indication information indicates to establish the first tunnel between the terminal device and the first access network device.

The second indication information may be carried in a second access stratum message from the terminal device. The second access stratum message may be a newly added control plane message. Alternatively, the second indication information may be carried in a reserved field of an original access stratum message, or may be a replacement for another information element in the original access stratum message.

In an optional implementation, when S1008 is implemented, the terminal device may further send the attribute information of the first tunnel to the first access network device, to negotiate an attribute parameter of the first tunnel with the first access network device.

In another optional implementation, when S1008 is implemented, the terminal device may further send session information associated with the first tunnel to the first access network device, so that the first access network device performs authorization determining, to allow establishment of the first tunnel with the terminal device.

S1009: The first access network device configures the first address of the first tunnel for the terminal device, and sends first information to the terminal device, where the first information indicates the first address of the first tunnel. Correspondingly, the terminal device receives the first information from the first access network device.

In a DC scenario, a communication system may further include a second access network device (SN). The first access network device is a master node of the terminal device, and the second access network device is a secondary node of the terminal device. The first access network device and the second access network device may further perform the following S1010a and S1010b in collaboration, to configure a second identifier and a second address of the first tunnel for the terminal device, so as to extend a multipath feature of the first tunnel in the DC scenario. For specific implementation details of S1010a, refer to the foregoing descriptions with reference to S705a. For specific implementation details of S1010b, refer to the foregoing descriptions with reference to S705b. Details are not described herein again.

S1010a (optional step): The first access network device sends Xn signaling to the second access network device through an Xn interface, where the Xn signaling is used to request to configure a communication path to the SN.

S1010b (optional step): The second access network device sends an Xn signaling response to the first access network device through the Xn interface, where the Xn signaling response is used to configure the communication path to the SN.

S1011: Establish the first tunnel using the first transport layer network protocol between the terminal device and the first access network device.

In an implementation, the terminal device may initiate S1011 based on received information. In an optional DC scenario, the first access network device may further send the second identifier of the first tunnel to the terminal device.

In another implementation, the first access network device may initiate S910 based on received information.

For specific implementation details of S1011, refer to a connection establishment process in the first transport layer network protocol, for example, a connection establishment process in a QUIC protocol. Details are not described herein.

Then, the terminal device may perform data transmission with the first access network device based on the first tunnel. In an optional DC scenario, the terminal device may separately perform data transmission with the first access network device or the second access network device based on a plurality of communication paths of the first tunnel. For example, a first identifier and the first address of the first tunnel are associated with a first communication path of the first tunnel, the terminal device performs data transmission with the first access network device through the first communication path, the second identifier and the second address of the first tunnel are associated with a second communication path of the first tunnel, and the terminal device performs data transmission with the second access network device through the second communication path.

In an optional DC scenario, the first access network device may further perform the following optional step.

S1012 (optional step): The first access network device sends Xn signaling to the second access network device through the Xn interface, to indicate a CID of the terminal device. For example, the first access network device sends sixth indication information to the second access network device through the Xn interface. The sixth indication information may indicate a fourth identifier of the first tunnel, or the sixth indication information may indicate a fourth identifier and a fourth address of the first tunnel. The fourth identifier and the fourth address are associated with the terminal device, and may be obtained by the first access network device in S1011.

The terminal device, the first access network device, and the second access network device further need to interact with each other, to add the second communication path to the first tunnel. A procedure of adding the second communication path may be initiated by the first access network device, or may be initiated by the second access network device, or may be initiated by the terminal device.

If the first access network device initiates, to the terminal device, the procedure of adding the second communication path, after S1011, the method may further include the following optional steps.

S1013 (optional step): The first access network device initiates a path addition operation to the terminal device based on an address of the SN and the CID. For example, the first access network device initiates the path addition operation to the terminal device based on the second identifier and the second address of the first tunnel.

In an example, S1013 may be implemented by using AS signaling. For example, the first access network device may send a third access stratum message to the terminal device, and the third access stratum message includes the second identifier, or the third access stratum message includes the second identifier and the second address.

In another example, S1013 may be implemented through the first tunnel. For example, the first access network device may send first control information to the terminal device through the first tunnel, and the first control information may include the second identifier, or the first control information may include the second identifier and the second address.

Herein, a difference from a multipath feature of a common QUIC protocol is as follows: Two endpoints of the multipath feature of the common QUIC protocol are a same entity (or node), and the multipath feature is caused by an address change of the UE (for example, an IP address change of the UE due to handover in 3GPP and Wi-Fi technologies). The case herein is caused by data transmission between the terminal device and different access network devices. As shown in FIG. 8, the UE separately performs data transmission with different access network devices through different paths of a same QUIC tunnel, for example, perform data transmission with the first access network device through a first communication path (for example, represented as a path 1), a first identifier, and a first address of the same QUIC tunnel, and perform data transmission with the second access network device through a second communication path (for example, represented as a path 2), a second identifier, and a second address.

S1014 (optional step): The first access network device sends Xn signaling to the second access network device through the Xn interface, to indicate information about the second communication path. For example, the Xn signaling includes the information about the second communication path, for example, the second identifier, a packet number space, and a packet sequence number.

If the second access network device initiates, to the terminal device, the procedure of adding the second communication path, after S1011, the method may further include the following optional steps.

S1015 (optional step): The second access network device (SN) initiates a path addition operation to the terminal device.

S1015 may be implemented through the first tunnel. For example, the second access network device may send third control information to the terminal device through the first tunnel, and the third control information may include the second identifier, or the third control information may include the second identifier and the second address. Optionally, the third control information further includes the fourth identifier and the fourth address of the first tunnel, a source path identifier of the third control information is the first identifier or the second identifier, and a target path identifier of the third control information is the fourth identifier.

S1016 (optional step): The second access network device synchronizes information about the second communication path to the first access network device. For example, the second access network device sends Xn signaling to the first access network device through the Xn interface. The Xn signaling includes the information about the second communication path, for example, the second identifier, a packet number space, and a packet sequence number.

Based on Embodiment 1, interaction between the terminal device and the first access network device and some core network elements may be designed, to introduce a tunnel using the QUIC protocol between the terminal device and the first access network device, so as to ensure quality of communication between the terminal device and the first access network device. In addition, in an optional DC scenario, interaction between the second access network device and the first access network device or the terminal device is further designed, to introduce different QUIC communication paths between the terminal device and the second access network device, so as to ensure quality of communication between the terminal device and the second access network device.

### Embodiment 4

In Embodiment 4, in a process of establishing a session between a terminal device and a core network, a first access network device may configure a first address of a first tunnel for the terminal device based on tunnel capability information reported by the terminal device, and notify an SMF network element of the first address via an uplink message, and the SMF network element notifies the terminal device of the first address via a downlink NAS message, to introduce the first tunnel using a first transport layer network protocol between the terminal device and the first access network device, so as to ensure quality of communication between the terminal device and the first access network device.

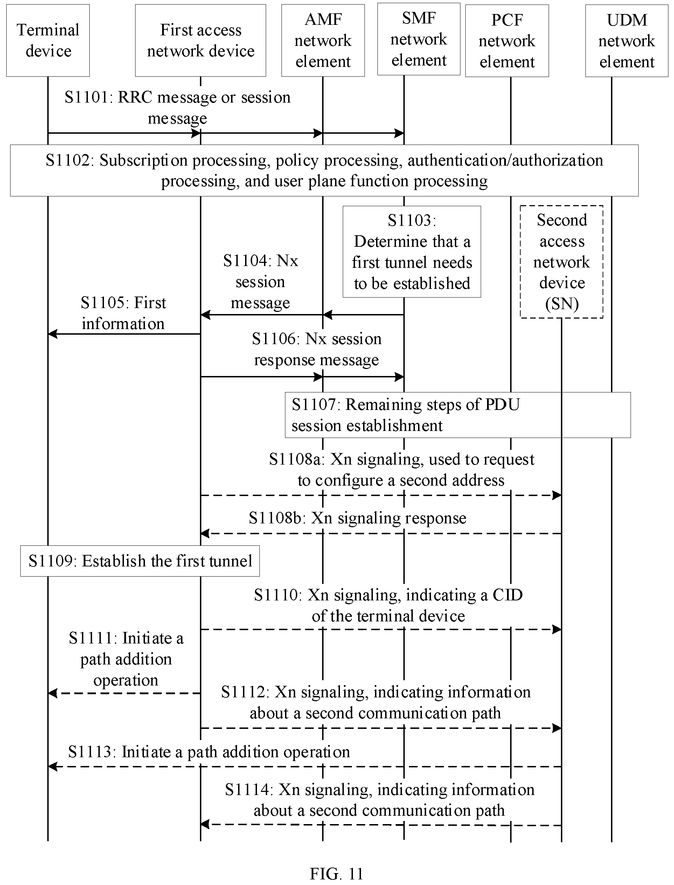

As shown in FIG. 11, the data transmission method may include the following steps.

S1101: The terminal device sends an uplink RRC message or a session message to the first access network device. Correspondingly, the first access network device receives the RRC message or the session message from the terminal device, and sends session-related content to the SMF network element.

In an example, the RRC message or the session message may include first indication information. The first indication information may indicate that the terminal device supports the first transport layer network protocol, or the first indication information indicates that the terminal device supports multipath communication performed based on the first transport layer network protocol. The first access network device may configure the first address of the first tunnel for the terminal device based on the first indication information if necessary. For example, if the first access network device also supports the first transport layer network protocol, or supports multipath communication performed based on the first transport layer network protocol, the first access network device may configure the first address of the first tunnel for the terminal device.

The first access network device may include the first indication information in an N1 message sent to an AMF network element. The first indication information may indicate that the terminal device supports the first transport layer network protocol, or the first indication information indicates that the terminal device supports multipath communication performed based on the first transport layer network protocol. The N1 message may further carry the first address of the first tunnel.

The AMF network element sends a session establishment request message to the SMF network element. The session establishment request message may carry the first indication information, and may further carry the first address of the first tunnel. In an optional implementation, the session establishment request message may further include attribute information of the first tunnel, and the attribute information may include, for example, any one of the following transmission modes: a data packet mode, a stream mode, or a security mode.

S1102: The terminal device, the first access network device, and a plurality of network elements (for example, including the AMF network element, the SMF network element, a PCF network element, and a UDM network element) of the core network perform subscription processing, policy processing, authentication/authorization processing, user plane function processing, and the like. For specific implementation details, refer to the foregoing descriptions with reference to S702. Details are not described herein again.

S1103: The SMF network element determines that the first tunnel needs to be established between the terminal device and the first access network device. For specific implementation details, refer to the foregoing descriptions with reference to S703. Details are not described herein again.

S1104: The SMF network element sends an Nx session message to the first access network device through the AMF network element. Correspondingly, the first access network device receives the Nx session message from the SMF network element.

In an example, the SMF network element sends a session message to the AMF network element through an N11 interface. The session message may include information that needs to be sent to the terminal device, for example, the first address and the attribute information of the first tunnel. The session message may further include information that needs to be sent to the first access network device, for example, indication information indicating to authorize the terminal device to establish the first tunnel with the first access network device.

The AMF network element sends the indication information to the first access network device through an N1 interface, to indicate to authorize the terminal device to establish the first tunnel with the first access network device.

S1105: The AMF network element sends, to the terminal device, the information that needs to be sent to the terminal device, for example, first information, including the first address of the first tunnel. Alternatively, the first information includes, for example, the attribute information of the first tunnel. Alternatively, the AMF network element may send, to the terminal device, the attribute information of the first tunnel that needs to be sent to the terminal device.

The AMF network element may send a session message to the first access network device through an N2 interface. The first access network device may send the first information and/or second information to the terminal device by using a downlink RRC message.

S1106: The first access network device feeds back an Nx session response message to the SMF network element through the AMF network element. Correspondingly, the SMF network element receives the Nx session response message from the first access network device.

S1107: The SMF network element and another core network element perform remaining steps of PDU session establishment. For specific implementation details, refer to a related standard document of 3GPP. Details are not described herein.

In a DC scenario, a communication system may further include a second access network device (SN). The first access network device is a master node of the terminal device, and the second access network device is a secondary node of the terminal device. The first access network device and the second access network device may further perform the following S1108a and S1108b in collaboration, to configure a second identifier and a second address of the first tunnel for the terminal device, so as to extend a multipath feature of the first tunnel in the DC scenario. For specific implementation details of S1108a, refer to the foregoing descriptions with reference to S705a. For specific implementation details of S1108b, refer to the foregoing descriptions with reference to S705b. Details are not described herein again.

S1109: Establish the first tunnel using the first transport layer network protocol between the terminal device and the first access network device.

In an implementation, the terminal device may initiate S1109 based on received information. In an optional DC scenario, the first access network device may further send the second identifier of the first tunnel to the terminal device.

In another implementation, the first access network device may initiate S1109 based on received information.

For specific implementation details of S1109, refer to a connection establishment process in the first transport layer network protocol, for example, a connection establishment process in a QUIC protocol. Details are not described herein.

Then, the terminal device may perform data transmission with the first access network device based on the first tunnel. In an optional DC scenario, the terminal device may separately perform data transmission with the first access network device or the second access network device based on a plurality of communication paths of the first tunnel. For example, a first identifier and the first address of the first tunnel are associated with a first communication path of the first tunnel, the terminal device performs data transmission with the first access network device through the first communication path, the second identifier and the second address of the first tunnel are associated with a second communication path of the first tunnel, and the terminal device performs data transmission with the second access network device through the second communication path.

In an optional DC scenario, the first access network device may further perform the following optional step.

S1110 (optional step): The first access network device sends Xn signaling to the second access network device through the Xn interface, to indicate a CID of the terminal device. For example, the first access network device sends sixth indication information to the second access network device through the Xn interface. The sixth indication information may indicate a fourth identifier of the first tunnel, or the sixth indication information may indicate a fourth identifier and a fourth address of the first tunnel. The fourth identifier and the fourth address are associated with the terminal device, and may be obtained by the first access network device in S1109.

The terminal device, the first access network device, and the second access network device further need to interact with each other, to add the second communication path to the first tunnel. A procedure of adding the second communication path may be initiated by the first access network device, or may be initiated by the second access network device, or may be initiated by the terminal device.

If the first access network device initiates, to the terminal device, the procedure of adding the second communication path, after S1109, the method may further include the following optional steps.

S1111 (optional step): The first access network device initiates a path addition operation to the terminal device based on an address of the SN and the CID. For example, the first access network device initiates the path addition operation to the terminal device based on the second identifier and the second address of the first tunnel.

In an example, S1111 may be implemented by using AS signaling. For example, the first access network device may send a third access stratum message to the terminal device, and the third access stratum message includes the second identifier, or the third access stratum message includes the second identifier and the second address.

In another example, S1111 may be implemented through the first tunnel. For example, the first access network device may send first control information to the terminal device through the first tunnel, and the first control information may include the second identifier, or the first control information may include the second identifier and the second address.

Herein, a difference from a multipath feature of a common QUIC protocol is as follows: Two endpoints of the multipath feature of the common QUIC protocol are a same entity (or node), and the multipath feature is caused by an address change of the UE (for example, an IP address change of the UE due to handover in 3GPP and Wi-Fi technologies). The case herein is caused by data transmission between the terminal device and different access network devices. As shown in FIG. 8, the UE separately performs data transmission with different access network devices through different paths of a same QUIC tunnel, for example, perform data transmission with the first access network device through a first communication path (for example, represented as a path 1), a first identifier, and a first address of the same QUIC tunnel, and perform data transmission with the second access network device through a second communication path (for example, represented as a path 2), a second identifier, and a second address.

S1112 (optional step): The first access network device sends Xn signaling to the second access network device through the Xn interface, to indicate information about the second communication path. For example, the Xn signaling includes the information about the second communication path, for example, the second identifier, a packet number space, and a packet sequence number.

If the second access network device initiates, to the terminal device, the procedure of adding the second communication path, after S1109, the method may further include the following optional steps.

S1113 (optional step): The second access network device (SN) initiates a path addition operation to the terminal device.

S1113 may be implemented through the first tunnel. For example, the second access network device may send third control information to the terminal device through the first tunnel, and the third control information may include the second identifier, or the third control information may include the second identifier and the second address. Optionally, the third control information further includes the fourth identifier and the fourth address of the first tunnel, a source path identifier of the third control information is the first identifier or the second identifier, and a target path identifier of the third control information is the fourth identifier.

S1114 (optional step): The second access network device synchronizes information about the second communication path to the first access network device. For example, the second access network device sends Xn signaling to the first access network device through the Xn interface. The Xn signaling includes the information about the second communication path, for example, the second identifier, a packet number space, and a packet sequence number.

Based on Embodiment 1, interaction between the terminal device and the first access network device and some core network elements may be designed, to introduce a tunnel using the QUIC protocol between the terminal device and the first access network device, so as to ensure quality of communication between the terminal device and the first access network device. In addition, in an optional DC scenario, interaction between the second access network device and the first access network device or the terminal device is further designed, to introduce different QUIC communication paths between the terminal device and the second access network device, so as to ensure quality of communication between the terminal device and the second access network device.

### Embodiment 5

Embodiment 5 may be a further supplement to Embodiment 1 to Embodiment 4, to perform tunnel migration between a terminal device and different base stations in a scenario related to base station handover, so as to introduce a first tunnel using a first transport layer network protocol between the terminal device and a target access network device, thereby ensuring quality of communication between the terminal device and both the target access network device and a source access network device.

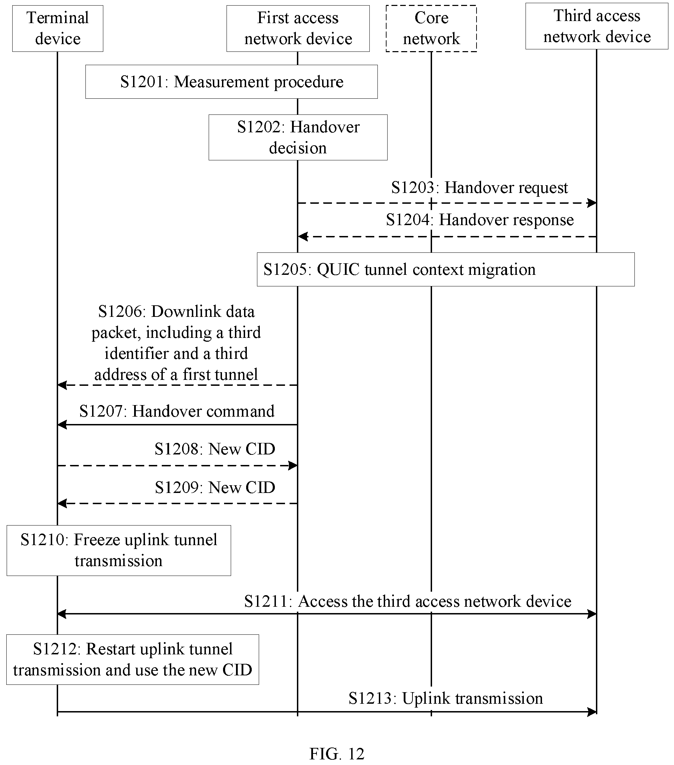

As shown in FIG. 12, the data transmission method may include the following steps.

S1201: The terminal device and a first access network device start a measurement procedure, where the first access network device is a source access network device of the terminal device. For specific implementation details, refer to a related standard document of 3GPP. Details are not described herein.

S1202: The first access network device decides, based on a measurement result, that the terminal device needs to be handed over to a third access network device, where the third access network device is a target access network device of the terminal.

S1203: The first access network device sends a handover request to the third access network device. Correspondingly, the third access network device receives the handover request.

The handover request may carry a parameter that needs to be carried in a mobile handover procedure. For specific implementation details, refer to a related standard document of 3GPP. Details are not described herein.

When a QUIC protocol is designed in the handover scenario in this embodiment of this application, the handover request may further include context information of the first tunnel. The context information of the first tunnel may include, for example, a fourth identifier and a fourth address of the first tunnel, and the fourth identifier and the fourth address are associated with the terminal device. For example, the context information of the first tunnel may further include:
a QUIC configuration/attribute and a security context;
a number of a last packet received/sent on uplink/downlink by using the QUIC protocol;
a Stream/Connection stream control status: per stream offset of data consumed;
a buffer status, as shown in FIG. 13; and
a multipath status: a PID, a PN, and a packet number of a last packet that has been sent/received on each path.

S1204: The third access network device configures a second identifier and a second address of the first tunnel for the terminal device, and sends a handover response to the first access network device. The handover response may include the second identifier and the second address of the first tunnel.

S1203 and S1204 are applicable to a handover scenario in which a connection exists between the terminal device and a base station (for example, the first access network device), and are applicable to a handover scenario in which no connection exists between the terminal device and a base station (for example, the first access network device) and handover needs to be performed via a core network.

S1205: The first access network device initiates tunnel migration to the terminal device.

If S1206 is performed according to an existing QUIC protocol, the first access network device may send a new data packet of a non-probe frame based on the second address configured by the third access network device, to migrate the context information of the first tunnel.

Alternatively, if a 3GPP-defined tunneling protocol is used, when S1206 is performed, the first access network device may initiate control plane path switching or a similar mechanism.

In an optional implementation, before S1205, the first access network device may perform the following steps.

S1206: The first access network device sends a path detection process or a path verification process to the terminal device, that is, sends a downlink data packet of a probe frame to the terminal device (by using an endpoint address of a tunnel allocated by a target RAN), where the downlink data packet may include, for example, a third identifier and a third address of the first tunnel. After verification is completed, the tunnel migration process in S1205 is initiated.

S1207: The first access network device sends a handover command to the terminal device.

In an optional implementation, the handover command may include the third identifier of the first tunnel. Alternatively, the handover command may include the third address of the first tunnel.

In another optional implementation, the third identifier of the first tunnel may be carried in a downlink RRC message different from the handover command. For example, S1209 is performed.

In another optional implementation, if the available fourth identifier provided by the terminal device is included in S1203, S1208 may not be implemented. On the contrary, the terminal device may further perform S1208, to publish an available identifier, that is, a new CID, of the terminal device to the first access network device or the third access network device.

S1208 (optional step): The terminal device sends the new CID represented as the third identifier to the first access network device.

S1209 (optional step): The first access network device sends the new CID represented as the third identifier to the terminal device.

S1210: After receiving the handover command, the terminal device freezes uplink transmission based on the first tunnel.

S1211: The terminal device accesses the third access network device.

S1212: The terminal device restores a context of the first tunnel, restarts uplink transmission based on the first tunnel, and performs data transmission with the third access network device by using the new CID. For example, in S1213, the terminal device performs data transmission with the third access network device based on the third identifier and the third address of the first tunnel.

For example, the terminal device sends an uplink data packet to the third access network device, and the uplink data packet includes the third identifier and the third address. Optionally, the uplink data packet may further include the fourth identifier and the fourth address.

Alternatively, for example, the terminal device receives a downlink data packet from the third access network device, and the downlink data packet includes the third identifier and the third address. Optionally, the downlink data packet may further include the fourth identifier and the fourth address.

### Embodiment 6

Embodiment 6 may also be a further supplement to Embodiment 1 to Embodiment 4, to perform tunnel migration between a terminal device and different base stations in a scenario that is related to base station handover and DAPS and in which a terminal device, a source access network device, and a target access network device all support multipath communication performed based on a QUIC protocol, so as to introduce a first tunnel using a first transport layer network protocol between the terminal device and the target access network device, thereby ensuring quality of communication between the terminal device and both the target access network device and the source access network device.

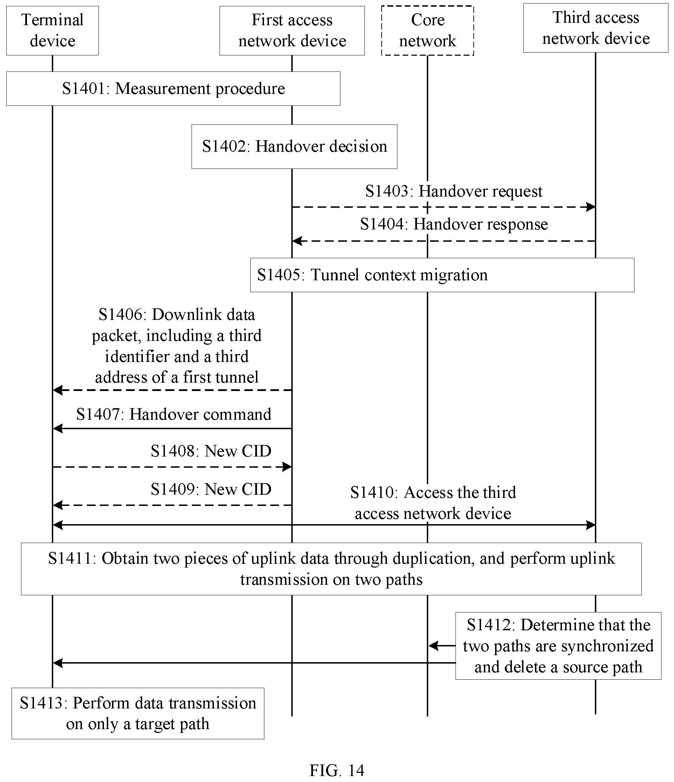

As shown in FIG. 14, the data transmission method may include the following steps.

S1401: The terminal device and a first access network device start a measurement procedure, where the first access network device is a source access network device of the terminal device. For specific implementation details, refer to a related standard document of 3GPP. Details are not described herein.

S1402: The first access network device decides, based on a measurement result, that the terminal device needs to be handed over to a third access network device, where the third access network device is a target access network device of the terminal.

S1403: The first access network device sends a handover request to the third access network device. Correspondingly, the third access network device receives the handover request.

The handover request may carry a parameter that needs to be carried in a mobile handover procedure. For specific implementation details, refer to a related standard document of 3GPP. Details are not described herein.

When a QUIC protocol is designed in the handover scenario in this embodiment of this application, the handover request may further include context information of the first tunnel. The context information of the first tunnel may include, for example, a fourth identifier and a fourth address of the first tunnel, and the fourth identifier and the fourth address are associated with the terminal device. For example, the context information of the first tunnel may further include:
a QUIC configuration/attribute and a security context;
a number of a last packet received/sent on uplink/downlink by using the QUIC protocol;
a Stream/Connection stream control status: per stream offset of data consumed;
a buffer status, as shown in FIG. 13; and
a multipath status: a PID, a PN, and a packet number of a last packet that has been sent/received on each path.

S1404: The third access network device configures a second identifier and a second address of the first tunnel for the terminal device, and sends a handover response to the first access network device. The handover response may include the second identifier and the second address of the first tunnel.

S1403 and S1404 are applicable to a handover scenario in which a connection exists between the terminal device and a base station (for example, the first access network device), and are applicable to a handover scenario in which no connection exists between the terminal device and a base station (for example, the first access network device) and handover needs to be performed via a core network.

S1405: The first access network device initiates tunnel context migration to the terminal device.

When the first access network device supports a DSPA capability, the first access network device obtains a DAPS capability of the terminal device or the third access network device.

For example, the terminal device sends the DAPS capability of the terminal device to the first access network device in an uplink RRC message, and the first access network device obtains the DAPS capability of the third access network device in signaling exchange related to handover execution of the third access network device (for example, a request message is sent to a target RAN to query whether DAPS is supported, or the target RAN is queried but the target RAN actively indicates to a source RAN that the target RAN supports DAPS). In addition, the first access network device may further obtain an MPQUIC capability of the third access network device (an obtaining manner is similar to that of obtaining the DAPS capability).

When the first access network device, the third access network device, and the terminal device all support MPQUIC and DPSA, the data transmission method may further include the following steps.

S1406: The first access network device initiates a path addition operation to the terminal device. For example, the first access network device may send a downlink non-probe frame to the terminal device. For the non-probe frame, an endpoint address (an IP address and a port) allocated by the third access network device may be used as an address of a new path, and a connection identifier CID(s) allocated by the third access network device may be used as a source CID.

In an optional implementation, the first access network device further indicates, to the terminal device, a data transmission rule on two paths. For example, a duplication mode is used (that is, same data is transmitted on the two paths), or a new path is preferential (that is, only data that cannot be sent on a new path is sent on an old path), or data transmission proportions on the two paths are set, or allocation is performed based on transmission quality on the two paths. The new path is a communication path that is between the terminal device and the third access network device and that uses a target transport layer network protocol, and the old path is a communication path that is between the terminal device and the first access network device and that uses the target transport layer network protocol.

To implement the path addition operation on the first tunnel, a group handover connection ID (CID) is needed. In this case, the terminal device and the first access network device may exchange a new CID, that is, a third identifier of the third access network device, in the following plurality of occasions and message mechanisms.

For example, the first access network device may include the third identifier in a handover command sent to the terminal device. Alternatively, for example, the first access network device may include the third identifier in existing AS signaling other than the handover command sent to the terminal device. Alternatively, for example, the first access network device may include the third identifier in newly added AS signaling sent to the terminal device.

S1407: The first access network device sends a handover command to the terminal device.

S1408 (optional step): The terminal device sends the new CID represented as the third identifier to the first access network device.

S1409 (optional step): The first access network device sends the new CID represented as the third identifier to the terminal device.

S1410: After receiving the handover command, the terminal device connects to the third access network device, and transmits data on one or two of the paths based on a data transmission mode indication on the two paths.

S1411: Using the duplication mode as an example, the terminal device obtains two pieces of uplink data through duplication, and perform uplink transmission on the two paths.

S1412: When the third access network device determines that a source path can be deleted (for example, data on the two paths is synchronized, or no context information is received from the first access network device within specified time, or an end marker sent by the first access network device is received), the third access network device may initiate a path deletion message to the terminal device, to delete the path between the terminal device and the first access network device.

In another implementation, the third access network device may indicate the first access network device to delete the path between the terminal device and the first access network device. Alternatively, when autonomously determining that no data needs to be transmitted on the path, the first access network device initiates a path deletion message to the terminal device, deletes the source path, and notifies the third access network device.

In another implementation, if the terminal device determines that the source path is no longer needed, the terminal device sends a path deletion message to the third access network device to delete the path between the terminal device and the first access network device, and the third access network device sends a notification message to the first access network device to indicate that the path has been deleted. The first access network device releases a related resource, for example, a QUIC protocol stack context. Alternatively, a path deletion message is sent to the first access network device, and after deletion, the third access network device is notified that the path has been deleted.

S1413: The terminal device transmits data on only a target path, for example, transmits data to the third access network device on only the target path.

Note: In handover processes in Embodiment 5 and Embodiment 6, if the third access network device supports DC, refer to descriptions in Embodiment 1 to Embodiment 4 above. Information about an SN is sent to the terminal device in the handover process. Alternatively, after handover is completed, an SN of DC may be added again, to perform steps related to the DC scenario in the foregoing embodiments. Details are not described herein again.

An embodiment of this application further provides a communication apparatus, configured to perform the method performed by the terminal device, the first access network device, the second access network device, the third access network device, or the SMF network element in the foregoing method embodiments. For related features, refer to the foregoing method embodiments. Details are not described herein again.

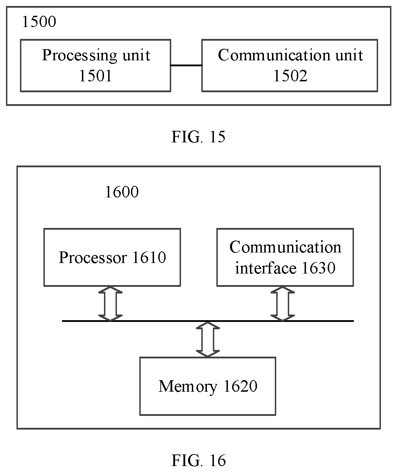

As shown in FIG. 15, a communication apparatus 1500 may include a processing unit 1501 and a communication unit 1502.

When the communication apparatus 1500 is configured to perform the method performed by the first access network device, the communication unit 1502 is configured to: send first information, where the first information indicates a first address of a first tunnel, the first tunnel is used to transmit data between a terminal device and the first access network device by using a first transport layer network protocol, and the first address is associated with the first access network device; and establish the first tunnel with the terminal device based on the first address. For a specific implementation, refer to the method steps implemented by the first access network device in the foregoing method embodiments. Details are not described herein again.

When the communication apparatus 1500 is configured to perform the method performed by the terminal device, the communication unit 1502 is configured to receive first information, where the first information indicates a first address of a first tunnel, the first tunnel uses a first transport layer network protocol, and the first tunnel is used to transmit data between the terminal device and a first access network device; and the processing unit 1501 is configured to establish the first tunnel with the first access network device based on the first information. For a specific implementation, refer to the method steps implemented by the terminal device in the foregoing method embodiments. Details are not described herein again.

When the communication apparatus 1500 is configured to perform the method performed by the SMF network element, the communication unit 1502 is configured to: receive first information, where the first information indicates a first address of a first tunnel, the first tunnel is used to transmit data between a terminal device and a first access network device by using a first transport layer network protocol, and the first address is associated with the first access network device; and establish the first tunnel with the first access network device based on the first address. For a specific implementation, refer to the method steps implemented by the SMF network element in the foregoing method embodiments. Details are not described herein again.

When the communication apparatus 1500 is configured to perform the method performed by the second access network device, the communication unit 1502 is configured to: send a second identifier of a first tunnel, or send a second identifier and a second address of a first tunnel, where the first tunnel is used to transmit data between a terminal device and the second access network device by using a first transport layer network protocol, the second identifier and the second address are associated with a second communication path of the first tunnel, the first tunnel includes at least one communication path, a first communication path in the at least one communication path is used to transmit data between the terminal device and a first access network device, a first identifier and a first address of the first tunnel are associated with the first communication path, and the second communication path in the at least one communication path is used to transmit data between the terminal device and the second access network device; and receive an uplink data packet from the terminal device, where the uplink data packet includes the second identifier and the second address. For a specific implementation, refer to the method steps implemented by the second access network device in the foregoing method embodiments. Details are not described herein again.

When the communication apparatus 1500 is configured to perform the method performed by the third access network device, the communication unit 1502 is configured to: send a third identifier of a first tunnel, or send a third identifier and a third address of a first tunnel, where the first tunnel is used to transmit data between a terminal device and the third access network device by using a first transport layer network protocol, the third address is associated with the third access network device, and the third access network device is a target access network device of the terminal device; and receive an uplink data packet from the terminal device, where the uplink data packet includes the third identifier and the third address. For a specific implementation, refer to the method steps implemented by the third access network device in the foregoing method embodiments. Details are not described herein again.

It should be understood that division into the units in the foregoing apparatus is merely logical function division. During actual implementation, all or some of the units may be integrated into one physical entity, or may be physically separated. In addition, the unit in the apparatus may be implemented in a form of invoking software by a processor. For example, the apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor like a central processing unit (Central Processing Unit, CPU) or a microprocessor, and the memory is a memory inside the apparatus or a memory outside the apparatus. Alternatively, the unit in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuit. For another example, in another implementation, the hardware circuit may be implemented by using a programmable logic device (programmable logic device, PLD). Using a field programmable gate array (Field Programmable Gate Array, FPGA) as an example, the field programmable gate array may include a large quantity of logic gate circuits, and a connection relationship between the logic gate circuits is configured by using a configuration file, to implement functions of some or all of the foregoing units. All the units of the foregoing apparatus may be implemented in a form of invoking software by a processor, or may be implemented in a form of a hardware circuit, or some of the units are implemented in a form of invoking software by a processor, and the remaining units are implemented in a form of a hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship between hardware circuits. The logical relationship between the hardware circuits is fixed or reconfigurable. For example, the processor is a hardware circuit implemented by an ASIC or a PLD, for example, an FPGA. In the reconfigurable hardware circuit, a process in which the processor loads a configuration file to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of the units of the apparatus. Types of the at least one processor may be different, for example, include a CPU and an FPGA, a CPU and an artificial intelligence processor, a CPU and a GPU, or the like.

In a simple embodiment, a person skilled in the art may figure out that the communication apparatuses in the foregoing embodiments each may be in a form shown in FIG. 16.

An apparatus 1600 shown in FIG. 16 includes at least one processor 1610 and a communication interface 1630. In an optional design, a memory 1620 may be further included.

A specific medium of connection between the processor 1610 and the memory 1620 is not limited in embodiments of this application.

In the apparatus shown in FIG. 16, when communicating with another device, the processor 1610 may transmit data through the communication interface 1630.

When the communication apparatus is in the form shown in FIG. 16, the processor 1610 in FIG. 16 may invoke computer-executable instructions stored in the memory 1620, so that the apparatus 1600 can perform any one of the foregoing method embodiments.

An embodiment of this application further relates to a chip system. The chip system includes a processor, configured to invoke a computer program or computer instructions stored in a memory, so that the processor performs the method according to any one of the foregoing embodiments.

In a possible implementation, the processor may be coupled to the memory through an interface.

In a possible implementation, the chip system may further directly include the memory. The memory stores the computer program or the computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, so that the processor performs the method according to any one of the foregoing embodiments.

For example, in embodiments of this application, the processor is an integrated circuit chip, and has a signal processing capability. For example, the processor may be an FPGA, or may be a general-purpose processor, a DSP, an ASIC or another programmable logic device, a discrete gate or transistor logic device, or a discrete hardware component, or may be a system on chip (system on chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. Thus, this application is intended to cover these modifications and variations to embodiments of this application, provided that they fall within the scope of the claims of this application and their equivalent technologies. In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

## Claims

1. A data transmission method, applied to a first access network device, wherein the method comprises:
sending first information, wherein the first information indicates a first address of a first tunnel, the first tunnel is used to transmit data between a terminal device and the first access network device by using a first transport layer network protocol, and the first address is associated with the first access network device; and
establishing the first tunnel with the terminal device based on the first address.

2. The method according to claim 1, wherein the method further comprises:
receiving first indication information, wherein the first indication information indicates that the terminal device supports the first transport layer network protocol, or the first indication information indicates that the terminal device supports multipath communication performed based on the first transport layer network protocol; and
configuring the first address of the first tunnel for the terminal device based on the first indication information.

3. The method according to claim 1 or 2, wherein the method further comprises:
receiving second indication information, wherein the second indication information indicates to establish the first tunnel between the terminal device and the first access network device; and
configuring the first address of the first tunnel for the terminal device based on the second indication information.

4. The method according to any one of claims 1 to 3, wherein the first information further comprises attribute information of the first tunnel; and
establishing the first tunnel with the terminal device based on the first address comprises:
establishing the first tunnel with the terminal device based on the first address and the attribute information of the first tunnel.

5. The method according to any one of claims 1 to 4, wherein sending the first information comprises:
sending the first information to the terminal device; or
sending the first information to a core network.

6. The method according to any one of claims 1 to 4, wherein the first tunnel comprises at least one communication path, a first communication path in the at least one communication path is used to transmit data between the terminal device and the first access network device, a first identifier of the first tunnel and the first address are associated with the first communication path, a second communication path in the at least one communication path is used to transmit data between the terminal device and a second access network device, and the method further comprises:
receiving second information of the first tunnel from the second access network device, wherein the second information comprises a second identifier of the first tunnel, or the second information comprises a second identifier of the first tunnel and a second address of the first tunnel, and the second identifier and the second address are associated with the second communication path; and
sending the second identifier to the terminal device, or sending the second identifier and the second address to the terminal device.

7. The method according to claim 6, wherein sending the second identifier to the terminal device, or sending the second identifier and the second address to the terminal device comprises:
sending a third access stratum message to the terminal device, wherein the third access stratum message comprises the second identifier, or the third access stratum message comprises the second identifier and the second address; or
sending first control information to the terminal device through the first tunnel, wherein the first control information comprises the second identifier, or the first control information comprises the second identifier and the second address.

8. The method according to claim 6 or 7, wherein the method further comprises:
sending a downlink data packet, wherein the downlink data packet comprises the second identifier and the second address of the first tunnel.

9. The method according to any one of claims 6 to 8, wherein the method further comprises:
sending sixth indication information to the second access network device, wherein the sixth indication information indicates a fourth identifier of the first tunnel, or the sixth indication information indicates a fourth identifier and a fourth address of the first tunnel, and the fourth identifier and the fourth address are associated with the terminal device.

10. The method according to any one of claims 1 to 9, wherein the method further comprises:
receiving third information of the first tunnel from a third access network device, wherein the third information comprises a third identifier of the first tunnel, or the third information comprises a third identifier of the first tunnel and a third address of the first tunnel, the third identifier and the third address are associated with the third access network device, and the third access network device is a target access network device of the terminal device; and
sending the third identifier to the terminal device, or sending the third identifier and the third address to the terminal device.

11. The method according to claim 10, wherein the method further comprises:
sending a downlink data packet to the terminal device, wherein the downlink data packet comprises the third identifier and the third address.

12. The method according to claim 10 or 11, wherein sending the third identifier to the terminal device, or sending the third identifier and the third address to the terminal device comprises:
sending a fourth access stratum message to the terminal device, wherein the fourth access stratum message comprises the third identifier, or the fourth access stratum message comprises the third identifier and the third address; or
sending second control information to the terminal device through the first tunnel, wherein the second control information comprises the third identifier, or the second control information comprises the third identifier and the third address.

13. The method according to any one of claims 10 to 12, wherein the method further comprises:
sending fifth indication information to the third access network device, wherein the fifth indication information indicates the fourth identifier of the first tunnel, or the fifth indication information indicates the fourth identifier and the fourth address of the first tunnel, and the fourth identifier and the fourth address are associated with the terminal device.

14. A data transmission method, applied to a terminal device, wherein the method comprises:
receiving first information, wherein the first information indicates a first address of a first tunnel, the first tunnel is used to transmit data between the terminal device and a first access network device by using a first transport layer network protocol, and the first address is associated with the first access network device; and
establishing the first tunnel with the first access network device based on the first address.

15. The method according to claim 14, wherein the method further comprises:
sending first indication information, wherein the first indication information indicates that the terminal device supports the first transport layer network protocol, or the first indication information indicates that the terminal device supports multipath communication performed based on the first transport layer network protocol.

16. The method according to claim 14 or 15, wherein the method further comprises:
sending second indication information, wherein the second indication information indicates to establish the first tunnel between the terminal device and the first access network device.

17. The method according to any one of claims 14 to 16, wherein the first information further comprises attribute information of the first tunnel; and
establishing the first tunnel with the first access network device based on the first address comprises:
establishing the first tunnel with the first access network device based on the first address and the attribute information of the first tunnel.

18. The method according to any one of claims 14 to 17, wherein receiving the first information comprises:
receiving the first information from the first access network device, wherein the first information is configured by the first access network device.

19. The method according to any one of claims 14 to 18, wherein the first tunnel comprises at least one communication path, a first communication path in the at least one communication path is used to transmit data between the terminal device and the first access network device, a first identifier of the first tunnel and the first address are associated with the first communication path, a second communication path in the at least one communication path is used to transmit data between the terminal device and a second access network device, and the method further comprises:
receiving second information of the first tunnel from the first access network device, wherein the second information comprises a second identifier of the first tunnel, or the second information comprises a second identifier of the first tunnel and a second address of the first tunnel, and the second identifier and the second address are associated with the second communication path.

20. The method according to claim 19, wherein receiving the second information of the first tunnel from the first access network device comprises:
receiving a third access stratum message from the first access network device, wherein the third access stratum message comprises the second information; or
receiving first control information from the first access network device through the first tunnel, wherein the first control information comprises the second information.

21. The method according to claim 19 or 20, wherein the method further comprises:
receiving a downlink data packet, wherein the downlink data packet comprises the second identifier and the second address of the first tunnel.

22. The method according to any one of claims 19 to 21, wherein the method further comprises:
sending an uplink data packet to the second access network device, wherein the uplink data packet comprises the second identifier and the second address of the first tunnel.

23. The method according to any one of claims 14 to 22, wherein the first access network device is a source access network device of the terminal device, and the method further comprises:
receiving a third identifier of the first tunnel, or receiving a third identifier and a third address of the first tunnel, wherein the third identifier and the third address are associated with data transmitted between the terminal device and a third access network device on the first tunnel, and the third access network device is a target access network device of the terminal device.

24. The method according to claim 23, wherein receiving the third identifier of the first tunnel, or receiving the third identifier and the third address of the first tunnel comprises:
receiving a fourth access stratum message from the first access network device, wherein the fourth access stratum message comprises the third identifier, or the fourth access stratum message comprises the third identifier and the third address; or
receiving second control information from the first access network device through the first tunnel, wherein the second control information comprises the third identifier, or comprises the third identifier and the third address.

25. The method according to claim 23 or 24, wherein the method further comprises:
receiving a downlink data packet from the first access network device or receiving a downlink data packet from the third access network device, wherein the downlink data packet comprises the third identifier and the third address.

26. The method according to any one of claims 23 to 25, wherein the method further comprises:
sending an uplink data packet to the third access network device, wherein the uplink data packet comprises the third identifier and the third address.

27. A communication apparatus, comprising at least one processor and an interface circuit, wherein the interface circuit is configured to provide data or code instructions for the at least one processor, and the at least one processor is configured to implement the method according to any one of claims 1 to 13 or the method according to any one of claims 14 to 26 by using a logic circuit or by executing the code instructions.

28. A communication system, comprising a communication apparatus configured to implement the method according to any one of claims 1 to 13, or comprising a communication apparatus configured to implement the method according to any one of claims 14 to 26.

29. A computer-readable storage medium, wherein the computer-readable medium stores program code, and when the program code is run on a computer, the computer is enabled to perform the method according to any one of claims 1 to 13 or perform the method according to any one of claims 14 to 26.

30. A computer program product, wherein when the computer program product runs on a computer, the computer is enabled to perform the method according to any one of claims 1 to 13 or implement the method according to any one of claims 14 to 26.
